(19) Europäisches Patentamt
European Patent Office
Office européen des brevets

(11) EP 4 227 604 A1

(12) EUROPEAN PATENT APPLICATION

(43) Date of publication:
**16.08.2023 Bulletin 2023/33**

(21) Application number: **22155911.5**

(22) Date of filing: **09.02.2022**

(51) International Patent Classification (IPC):
***F25B 9/14*** *(2006.01)* ***F25B 23/00*** *(2006.01)*
***H01M 8/04014*** *(2016.01)* ***H01M 8/04029*** *(2016.01)*
***H01M 8/04007*** *(2016.01)* ***H01M 8/18*** *(2006.01)*
***H01M 8/22*** *(2006.01)* ***H01M 14/00*** *(2006.01)*
***C25B 9/15*** *(2021.01)* ***C25B 15/021*** *(2021.01)*

(52) Cooperative Patent Classification (CPC):
**H01M 14/00; C25B 9/15; C25B 15/021; F25B 9/14; F25B 23/00; H01M 8/04014; H01M 8/04029; H01M 8/04074; H01M 8/182; H01M 8/188; H01M 8/22; H01M 8/227;** H01M 2220/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Haese, Frank**
**18435 Stralsund (DE)**

(72) Inventor: **Haese, Frank**
**18435 Stralsund (DE)**

(74) Representative: **Epping - Hermann - Fischer Patentanwaltsgesellschaft mbH**
**Schloßschmidstraße 5**
**80639 München (DE)**

# (54) DEVICE FOR CONVERTING THERMAL ENERGY OF AN EXTERNAL HEAT SOURCE INTO ELECTRICAL ENERGY

(57) A device for converting thermal energy of an external heat source into electrical energy is disclosed. The device comprises:
- a positive electrode half-cell comprising a positive electrode and a positive electrode electrolyte comprising a quinone derivative or a quinone-dihydroquinone derivative mixture,
- a negative electrode half-cell comprising a negative electrode and a negative electrode electrolyte comprising a dihydroquinone derivative or a dihydroquinone-quinone derivative mixture, and
- a conductive connection between the positive electrode and the negative electrode,
- means for heating and optionally means for cooling the positive electrode electrolyte and/or negative electrode electrolyte.

EP 4 227 604 A1

## Description

TECHNICAL FIELD

The present invention relates to a device for converting thermal energy of an external heat source into electrical energy and to a corresponding method

TECHNICAL BACKGROUND

Globally, there is an ever-increasing demand for the generation of electrical energy and the development of energy storage systems. Reasons for that include the growing world population, an increasing scarcity of fossil fuels, a worldwide conversion in the transportation and mobility sector to electric drives, as well as climate change with increasing demand for energy-intensive air-conditioning technologies. Of particular interest for the production and storage of electrical energy is the use of sustainable sources.

Batteries have been around since the 1800s, which are known to convert stored chemical energy into electrical energy. Advances in technology and falling prices mean grid-scale battery facilities that can store increasingly large amounts of energy are enjoying record growth.

The entrenched market leader are Li-ion batteries. However, with flow batteries having been reported to show lower degradation, improved safety, and longer-duration capability compared to their Li-ion counterparts, they represent a serious competition. Redox flow batteries (RFB), e.g., are capable of storing excess energy, typically surplus energy from renewable sources, such as wind or sunlight, in the form of chemical energy (M. Skyllas-Kazacos et al., Journal of The Electrochemical Society, 158 (8) 55-79, 2011). The redox flow battery essentially consists of three components. The first component is the cell, consisting of a membrane and two electrodes, similar to the fuel cells. The other two components are the tanks for storing the electrolyte fluids. The two electrolyte liquids are of different concentrations or valences and are each fed via a pump in separate circuits to one electrode each.

Disadvantages for flow batteries, however, include expensive fluids that are also corrosive or toxic, and the balance of system costs are relatively high along with the parasitic (onsite) load needed to power the pumps.

The market leader in flow battery chemistry is vanadium. Since vanadium is expensive, not easily accessible and subject to market fluctuations, researchers are working on other chemistries to bring down costs and improve the safety and environmental profile of flow batteries. US 2018/0233763 A1, e.g., discloses a copper based redox flow cell comprising in the negative half-cell the redox couple $Cu^{1+}/Cu^{0}$ and in the positive half-cell any suitable redox couple including halogens, such as $Cl^{-}/Cl_2$ or $Br^{-}/Br_2$ couple, $Fe^{2+}/Fe^{3+}$ couple, or $Cu^{+}/Cu^{2+}$ couple. Also, an all-copper flow battery comprising the redox couple $Cu^{1+}/Cu^{0}$ in the negative electrode half-cell and the redox couple $Cu^{+}/Cu^{2+}$ in the positive electrode half-cell have been reported (J.S. Wainright et al., "Investigation a bromide supported electrolyte for an all-copper flow battery", Journal of the Electrochemical Society, 2018, 165 (9), A1797-A1804).

The biggest drawback of RFB, however, is that they need to be charged with the electricity they are intended to store and later release. This fundamental disadvantage requires an external power source and is always associated with power losses due to irreversible side reactions, especially unwanted heat generation, when charging and discharging the batteries. Also, pumps for circulation of the electrolytic solutions are necessary, requiring an external power source for commissioning. The fact that storage and generation of electrical energy must be spatially separated to avoid power losses due to back-mixing of the electrolytes and the presence of pumps make RFB furthermore bulky and cost intensive. Also, production of unwanted hydrogen gas and oxygen gas may not completely be avoided, leading to less efficiency and damage of the RFB. With cyclic electrodeposition of solid components, such as copper metal, there is always a risk of uneven deposition or re-dissolution and dendrite formation, which leads to the need of increased maintenance and furthermore may damage the cell by short-circuiting.

To tackle with some of these drawbacks, technologies are being investigated to generate electricity directly from heat. For example, a redox flow battery for heat to power conversion has been suggested in WO 2019 066651 A1. This system combines a redox flow battery with new redox partners, such as hexacyanoferrate ($Fe(CN)_6^{4-/3-}$) and polyiodide ($I_3^-$ to 3 $I^-$), having opposite dependency on temperature. However, all disadvantages described above in connection with RFB likewise apply to the heat to power conversion system. A further disadvantage is that hexacyanoferrate is temperature-sensitive and decomposes at temperatures above 80 °C. Therefore, operation of the system is limited to relatively low temperatures, whereby attractive higher temperatures resulting from, e.g. heat waste, cannot be used. In addition, the heat to power conversion systems show low capacities and low power densities due to the use of dilute solutions and high molar masses of the redox compounds.

The disadvantages common to the known technologies are that they have low efficiencies, low power densities (no short-term high current flow), low energy densities (no long runtime at base current consumption), and no or no significant storage possibilities. Furthermore, the systems are not economical, not operable in a continuously stable manner and/or are operation intensive and some systems need external additional power sources. Also, the technologies

allow harvesting of electricity only once per cycle.

SUMMARY OF THE INVENTION

In view of the above, it is an object of the invention to provide a system capable of converting heat, i.e. thermal energy, into electrical energy in a reversible manner. It is a further object to ensure sufficiently high cell voltages and excellent efficiency and cycle life without the need of external power sources. The system may allow for the storage of electrical energy and heat.

These aims may at least partially be achieved by a device for converting thermal energy of an external heat source into electrical energy.

The device comprises a positive electrode half-cell comprising a positive electrode and a positive electrode electrolyte comprising a quinone derivative or a quinone-dihydroquinone derivative mixture. The quinone and dihydroquinone derivatives comprise at least quinone and dihydroquinone molecules without, with one or with several substituents. For example, the quinone molecules may comprise benzoquinone (1,4-benzoquinone, 1,2-benzoquinone, Hydroxy-1,4-benzoquinone, 1,4-benzoquinone-2,5-di-tert-butyl, 1,4-benzoquinone-mono-tert-butyl, 1,4-benzoquinone-monomethyl, 1,4-benzoquinone-2,3-dimethyl, 1,4-benzoquinone-2,5-dimethyl, 1,4-benzoquinone-2,6-dimethyl, 1,4-benzoquinone-trimethyl, 1,4-benzoquinone-tetramethyl, 1,4-benzoquinone-monoethyl, 1,4-benzoquinone-2,5-di-tert-amyl, 1,4-benzoquinone-sulfonate, 1,2-benzoquinone-3-sulfonate, 1,2-benzoquinone-3,5-disulfonate, 4,5-benzoquinone-1,3-disulfonate), naphthoquinone (1,4-Naphthoquinone, 1,4-Naphthoquinone-2-methyl, 1,4-Naphthoquinone-2,3-dimethyl, 1,2-Naphthoquinone, 1,2-Naphthoquinone-4-sulfonate, 2-Hydroxy-1,4-Naphthoquinone, 5-Hydroxy-1,4-Naphthoquinone, 5,8-dihydroxy-1,4-Naphthoquinone), anthraquinone (9,10-anthraquinone, 9,10-anthraquinone-1-sulfonate, 9,10-anthraquinone-2-sulfonate, Anthraquinone-2,7-disulfonate, anthraquinone-2,6-disulfonate, Anthraquinone-1,5-disulfonate, Anthraquinone-1,8-disulfonate, 2,6-dihydroxyanthraquinone, Anthraquinone-3,4-diol-2-sulfonate, Anthraquinone-1,8-diol-2,7-disulfonate, Anthraquinone-2,6-diol, Anthraquinone-1,8-diol, Anthraquinone-1-ol Anthraquinone-1,5-diol, Anthraquinone-1,2-diol, Anthraquinone-1,4-diol, Anthraquinone-2,6-diol-1,5-dimethyl, Anthraquinone-6-methyl-1,3,8-triol, Anthraquinone-1,2,5,8-tetraol, Anthraquinone-2,3,6,7-tetrahydroxy, Anthraquinone-1,4,5,8-tetraol) or phenanthrenequinone derivatives.

Liquid quinone molecules may comprise 1,4-benzoquinone-tetra(ethyleneglycolmonomethylether), 1,4-benzoquinone-tetra(diethyleneglycolmonomethylether), 1,4-naphthoquinone-2,3-di(ethyleneglycolmonomethylether) and 1,4-naphthoquinone-2,3-di(diethyleneglycolmonomethylether).

The dihydroquinone molecules may comprise dihydroquinone (1,2-Dihydroxybenzene, 1,4-Dihydroxybenzene, 1,2,3-Trihydroxybenzene, 1,4-dihydrobenzoquinone-2,5-di-tert-butyl, 1,4-dihydrobenzoquinone-mono-tert-butyl, 1,4-dihydrobenzoquinone-monomethyl, 1,4-dihydrobenzoquinone-2,3-dimethyl, 1,4-dihydrobenzoquinone-2,5-dimethyl, 1,4-dihydrobenzoquinone-2,6-dimethyl, 1,4-dihydrobenzoquinone-trimethyl, 1,4-dihydrobenzoquinone-tetramethyl, 1,4-dihydrobenzoquinone-monoethyl, 1,4-dihydrobenzoquinone-2,5-di-tert-amyl, 1,4-dihydrobenzoquinone-sulfonate, 1,2-dihydrobenzoquinone-3-sulfonate, 1,2-dihydrobenzoquinone-3,5-disulfonate, 4,5-dihydroxy-1,3-benzenedisulfonate), naphthalenediol (naphthalene-1,4-diol, Naphthalene-1,4-diol-2-methyl, Naphthalene-1,4-diol-2,3-dimethyl, naphthalene-1,2-diol, Naphthalene-1,2-diol-4-sulfonate, 2-Hydroxy-1,4-Naphthalenediol, 5-Hydroxy-1,4-Naphthalenediol, 5,8-dihydroxy-1,4-Naphthalenediol), dihydroxyanthracene, (9,10-anthrahydroquinone, 9,10-Anthrahydroquinone-2,7-disulfonate, 9,10-anthrahydroquinone-1-sulfonate, anthrahydroquinone-2-sulfonate, Anthrahydroquinone-1,5-disulfonate, Anthrahydroquinone-1,8-disulfonate, anthrahydroquinone-2,6-disulfonate, 2,6-dihydroxyanthrahydroquinone, Anthrahydroquinone-2,6-diol-1,5-dimethyl, Anthrahydroquinone-2,3,6,7-tetrahydroxy, Anthrahydroquinone-3,4-diol-2-sulfonate, Anthrahydroquinone-1,8-diol-2,7-disulfonate, Anthrahydroquinone-2,6-diol, Anthrahydroquinone-1,8-diol, Anthrahydroquinone-1-ol, Anthrahydroquinone-1,5-diol, Anthrahydroquinone-1,2-diol, Anthrahydroquinone-1,4-diol, Anthrahydroquinone-6-methyl-1,3,8-triol, Anthrahydroquinone-1,2,5,8-tetraol, Anthrahydroquinone-1,4,5,8-tetraol), or dihydrophenanthrenequinone derivatives.

Liquid dihydroquinone molecules may comprise 1,4-dihydrobenzoquinone-tetra(ethyleneglycolmonomethylether), 1,4-dihydrobenzoquinone-tetra(diethyleneglycolmonomethylether), naphthalene-1,4-diol-2,3-di(ethyleneglycolmonomethylether) and naphthalene-1,4-diol-2,3-di(diethyleneglycolmonomethylether).

The device further comprises a negative electrode half-cell comprising a negative electrode and a negative electrode electrolyte comprising a dihydroquinone derivative or a dihydroquinone-quinone derivative mixture. The dihydroquinone and quinone derivatives comprise at least dihydroquinone and quinone molecules without, with one or with several substituents. The dihydroquinone molecules may comprise dihydroquinone, naphthalenediol, 9,10-dihydroxyanthracene or dihydrophenanthrenequinone derivatives. The quinone molecules may comprise benzoquinone, naphthoquinone, anthraquinone or phenanthrenequinone derivatives.

A conductive connection between the positive electrode half-cell and the negative electrode half-cell is established.

Further, the device comprises means for heating and optionally means for cooling the positive electrode electrolyte and/or negative electrode electrolyte.

A thermolabile compound is present in the positive and in the negative electrode electrolyte, and is selected from the group of ammonium salts.

In general, when ammonia or an amine is added to an acid, the nitrogen atom is protonated to produce an ammonium salt. Depending on the type of amine and acid, thermal decomposition of ammonium salts at relatively high temperatures can be observed, leading to a variety of reaction products. In specific cases, the decomposition of the compounds occurs at lower temperatures, is reversible and leads to the formation of ammonia or an amine and an acid. This means that the ammonium salt, which is decomposed above the decomposition temperature into a nitrogen compound and an acid, is formed back when reaching a certain temperature below the decomposition temperature.

It is well-established, for example, that diammonium sulfate decomposes upon heating into ammonia and ammonium hydrogen sulfate. This reaction is reversible and the back reaction to diammonium sulfate occurs upon cooling.

The positive electrode half-cell and the negative electrode half-cell are linked to each other, such that protons can migrate between the half-cells but not the quinone derivative, not the dihydroquinone derivative, not the thermolabile compound, not the dissociation products of the thermolabile compound and not any decomposition species of these components other than protons. Preferably, no other molecules and ions of the electrolytes besides the protons can migrate between the half-cells.

In an embodiment, the thermolabile compound reversibly releases protons upon heating to a temperature not higher than 220 °C. In a preferred embodiment, the thermolabile compound reversibly releases protons upon heating to a temperature not higher than 140 °C.

Lower heating temperatures may save heating energy. In addition, undesired side reactions can be avoided at lower temperatures.

In an embodiment, the thermolabile compound allows good adjustment within the pH range of 0 to 8.5, more preferably within the pH range of 2 to 8, which is a preferred working range of the device.

In an embodiment, the thermolabile compound is free of organic halogen. The avoidance of organic halogens is critical with regard to the safety and environmental compatibility of the device.

In an embodiment, the thermolabile compound is selected from the group of ammonium salts.

In an embodiment, a sum of the concentrations of the quinone derivative and the dihydroquinone derivative is in a range of 0.1 mol/L to 12 mol/L, preferably of 0.5 mol/L to 10 mol/L, more preferably in the range of 1 mol/L to 7 mol/L, even more preferably in the range of 1 mol/L to 5 mol/L.

In an embodiment, the thermolabile compound is present in a concentration in a range of 0.01 mol/L to 10 mol/L, preferably 0.01 mol/L to 5 mol/L, more preferably in the range of 0.05 mol/L to 4 mol/L, even more preferably in the range of 0.1 mol/L to 3 mol/L, particularly preferably in the range of 0.15 mol/L to 2 mol/L and most preferably in a concentration of 0.2 mol/L to 1 mol/L with respect to the volume of the electrode electrolytes.

In an embodiment, the thermolabile compound is solvent and is present in a concentration in a range of 0.01 mol/L to 12 mol/L.

In an embodiment, the positive electrode electrolyte and the negative electrode electrolyte are liquid electrolytes comprising a solvent for dissolving molecules and ions which are present in the electrolytes. In this embodiment, the solvent may be an aqueous or a non-aqueous solvent. Preferably, the solvent comprises water or an aqueous solvent.

In an embodiment, the positive electrode electrolytes and the negative electrode electrolytes may contain inert and thermally stable spectator anions and cations to advantageously increase the conductivity within the electrolytes. In a preferred embodiment, the electrolytes contain no ions besides ions originating from the quinone derivative, the dihydroquinone derivative, the thermolabile compound and from the decomposition species of these components. No further components are necessary for the desired functionality of the device.

In an alternative embodiment, the positive electrode electrolyte and the negative electrode electrolyte are aqueous low melting solid solvents or aqueous low melting eutectic compounds. Possible specimens are described later.

In an alternative embodiment, the positive electrode electrolyte and the negative electrode electrolyte are solid electrolytes comprising proton conducting materials. In this embodiment a separator between the two half-cells is not obligatory. Optionally, the device comprises a separator interposed between the positive electrode half-cell and the negative electrode half-cell, wherein the separator is proton-permeable. In the case of a separator as a barrier between the two half-cells, it is possible to add further electron conducting solid material within each half-cell, such as graphite or magnetite $Fe_3O_4$, to increase conductivity and performance.

The proton conducting materials may be chosen from a group comprising proton-conducting ceramics (PCCs), polyoxometalates (POMs), covalent organic frameworks (COFs), proton-conducting single crystals, and/or organic polymers.

In an alternative embodiment, in particular in the case of liquid electrolytes or electrolytes being low melting solid solvents or low melting eutectic compounds, the device further comprises a separator interposed between the positive electrode half-cell and the negative electrode half-cell to separate the positive electrode electrolyte and the negative electrode electrolyte from each other.

The separator is preferably permeable with respect to protons but is impermeable to the quinone derivative, the dihydroquinone derivative, the thermolabile compound, dissociation products of the thermolabile compound and decomposition species of the thermolabile compound other than protons. Said decomposition species may come into existence by heating the positive electrode electrolyte and by the use of the device for converting thermal energy of a heat source into electrical energy.

In an embodiment, the separator is made of any one of a glass frit, a poly(phenoxy phospazene) (POP), a sulfonated naphthalic polyimide, a polybenzimidazole (PBI), an alkylsulfonated polybenzimidazole (PBI-AS), a sulfonated poly(arylene ether ether ketone) (PEEK-$SO_3H$), a sulfonated poly(arylenesulfone) (PSU-$SO_3H$), a perfluoro sulfonic acid polymer, a non-fluorinated aliphatic and an aromatic hydrocarbon-based polymer.

In a further embodiment, means for heating and cooling are internal or external heat exchangers, pipes, plates, sheets, panels, spirals, jackets, internal or external coils for conducting heating or cooling transfer medium to the electrolyte in the at least one half-cell.

In a further embodiment, the positive electrode and negative electrode are made of silicon; glassy carbon; graphite; recycled carbon; a combination of silicon and carbon; an inert metal, such as tantalum, titanium, gold or platinum; magnetite; pyrosealed graphite flow plates; carbon black, such as industrial carbon black; porous carbon; carbon paste; single-walled carbon nanotubes; graphene nanosheets; or are carbon paper electrodes.

The invention is further directed to a method of converting thermal energy into electrical energy by using the device as defined in any one of claims 1 to 9 comprising the following steps:

- establishing a conductive connection between the positive electrode half-cell and the negative electrode half-cell so that electrons can migrate between the half-cells;
- heating of the positive electrode electrolyte via an external heat source to a temperature of 40 °C up to 220 °C, preferably 60 °C up to 140 °C, and optionally active or passive cooling or heating of the negative electrode electrolyte, thereby driving a proton release reaction by an at least partial thermal decomposition of the thermolabile compound in the positive electrode electrolyte, and thereby generating a current flow from the positive to the negative electrode;
- active or passive cooling of the previously heated positive electrode electrolyte and heating of the negative electrode electrolyte to a temperature at which the back reactions take place and thereby generating a current flow in the opposite direction to the current flow generated in the before mentioned step, wherein the electrical energy produced by the current flow generated in the before mentioned steps may be directly used or stored or is subject of power conversion.

In an embodiment, the external heat source is heat waste, solarthermy, geothermy, nuclear fission at a nuclear power plant or in spacecrafts, or nuclear fusion, and in an further embodiment, the cooling is effected by the use of ambient or cooled air or other gaseous or liquid medium suitable for cooling, heat radiation to surrounding environment, a molten salt or evaporation of a fluid, such as water.

The invention is further directed to a module comprising two or more devices as defined before, wherein the two or more devices are electrically connected in series or in parallel, for example for scaling up the effect of the described device.

The invention is further directed to an energy saving system, comprising the device and a capacitor or a superconducting magnetic energy storage system or an accumulator coupled to the device for storing the electrical energy generated by said device.

The invention is further directed to a battery, comprising:

- a positive electrode half-cell comprising a positive electrode and a positive electrode electrolyte comprising a quinone derivative or a mixture of a quinone-dihydroquinone derivative,
- a negative electrode half-cell comprising a negative electrode and a negative electrode electrolyte comprising a dihydroquinone derivative or a mixture of a quinone-dihydroquinone derivative,
- a conductive connection between the positive electrode half-cell and the negative electrode half-cell and
- a thermolabile compound,
- wherein in a discharged state of the battery, the positive and the negative electrode electrolyte comprise the thermolabile compound in an undecomposed state,
- wherein in a charged state of the battery, the positive electrode electrolyte comprises protons and other decomposition products of the at least partly decomposed thermolabile compound, which come into existence by heating the positive electrode electrolyte, and the negative electrode electrolyte comprises the thermolabile compound in the undecomposed state, and
- wherein the positive electrode half-cell and the negative electrode half-cell are linked to each other, such that protons can migrate between the half-cells but not the quinone derivative, the dihydroquinone derivative, the intact thermolabile compound and its decomposition species other than protons.

The invention is further directed to a method of charging the battery by converting thermal energy of an external heat source into chemical energy, comprising the steps:

- interrupting a conductive connection between the positive electrode half-cell and the negative electrode half-cell so that electrons cannot migrate between the half-cells;
- heating of the positive electrode electrolyte via a heat source to a temperature of 40 °C to 220 °C, preferably 60 °C up to 140 °C, for a time period of 1 minute to 5 hours, thereby driving a proton release reaction by decomposing the thermolabile compound in a proton, ammonia or an amine species and an anion.

In an embodiment, the external heat source is heat waste, solarthermy, geothermy, nuclear fission at a nuclear power plant or in spacecrafts, or nuclear fusion, and in an further embodiment, the cooling is effected by the use of ambient or cooled air or other gaseous or liquid medium suitable for cooling, heat radiation to surrounding environment, a molten salt or evaporation of a fluid, such as water.

The invention comprises a device for converting thermal energy of an external heat source into electrical energy, comprising a positive electrode half-cell comprising a positive electrode and a positive electrode electrolyte; a negative electrode half-cell comprising a negative electrode and a negative electrode electrolyte; a conductive connection between the positive electrode half-cell and the negative electrode half-cell; means for heating and optionally means for cooling the positive electrode electrolyte and/or negative electrode electrolyte; a "quinone or dihydroquinone derivative"/ "quinone-dihydroquinone couple" selected from the group consisting of un-substituted and alkyl-, hydroxy-, sulfonate-, amino-, halogen-substituted p-benzoquinones, p-benzodihydroquinones, o-benzoquinones, o-benzodihydroquinones, 1,4-naphthoquinones, 1,4-naphthalenediol, 1,2-naphthoquinones, 1,2-naphthalenediol, 9,10-anthraquinone, 9,10-dihydroxyanthracene, 9,10-phenanthrenequinone, 9,10-phenanthrenehydroquinone, and in both electrode electrolytes a thermolabile compound of the following groups or formulas which releases reversibly at least one proton upon heating and binds it upon cooling:
Any aminoalcohol or diamine, typically methanolamine, methyldiethanolamine, that undergo reversible acid-base reactions with acids.

Diamine salts with weak or strong organic acids and/or acid anhydrides, e.g. carboxylic acids and/or dicarboxylic acids and/or tricarboxylic acids, such as ethylene diamine monoacetate, ethylene diamine diacetate, cyclohexane-1,2-diamine monoacetate, cyclohexane-1,2-diamine diacetate, 1,2-propylene diamine monoformate, ethylene diamine malonate, phthalic ethylene ammonium salt (in water containing media derived from phthalic anhydride/phthalic acid and ethylenediamine).

Ammonia salts with weak or strong organic acids, such as ammonium acetate at a pH 7 at 25 °C, with a temperature range of decomposition between 64 and 140 °C and/or ammonium propionate (decomposition at 100 - 130 °C) and/or ammonium butyrate and/or ammonium pentanoate and/or ammonium lactate.

Proton-release upon heating:

$$CH_3CO_2^-(NH_4)^+ \rightleftharpoons CH_3CO_2^- + H^+ + NH_3$$

Reversible back reaction upon cooling:

$$CH_3CO_2^- + H^+ + NH_3 \rightleftharpoons CH_3CO_2^-(NH_4)^+$$

Substituted monoamine salts with weak or strong acids, such as monomethylammonium acetate, dimethylammonium propionate, dimethylammonium acetate, trimethylammonium formate, trimethylammonium acetate, ethylammmonium acetate, diethylammonium acetate, diethylammonium propionate, triethylammmonium chloride, and any combination thereof.

Eutectic mixtures of two or more aforementioned thermolabile compounds, such as ammonium lactate / ammonium acetate.

Inorganic salts such as diammoniumhydrogenphosphate which decomposes reversibly into ammoniumdihydrogenphosphate and ammonia $NH_3$ at relatively moderate temperature above 70 °C and diammoniumsulfate which decomposes reversibly into ammoniumhydrogensulfate and ammonia at or above 100 °C. This comprises the combination of an organic amine with an inorganic acid, such as di-(methylammonium)hydrogenphosphate.

Solid inorganic and/or organic materials which reversibly release and bind protons in aqueous and/or organic media with or without water are suitable as well, such as wet silica gel, or ion exchange resins, e.g. commercial "Sirotherm Resins".

Solid or liquid polymers are appropriate materials. The polymers can be optionally immobilized on a support, such as the electrodes or on the walls of the half-cells. Another advantage is that they do not set free nitrogen-containing volatile compounds when heated, such as protonated polyaniline, polyethyleneimine, also known as polyaziridine, and poly(allylamine).

Since polyaniline is an electrical conductor, it can be used as a thermolabile compound and as part of solid electrolytes, as well.

C-H acidic compounds in aqueous media are suitable, such as acetylacetone and nitroethane.

Protic Ionic Liquids, such as triethylammonium acetate, n-butylammonium acetate and ammonium pentanoate can serve as a thermolabile compound.

Preferable is the use of thermolabile compounds with a low molecular weight-to-proton ratio to increase the energy density.

A small amount of water in the cell may be of advantage to support the formation of a protic environment and a fast proton exchange kinetics. Further, the presence of water prevents irreversible formation of undesired side products, such as amides from ammonium carboxylates. In case the thermolabile compound cannot form amides, such as due to steric hindrance or when tertiary amines are used, the addition of water is not mandatory.

Any substance is suitable as long as it reversibly releases protons and decomposition products upon heating to a temperature not higher than 220 °C, provides ionic conductivity and does not contain organic halogens or oxidizing components.

Another method to reversibly decrease the pH upon heating is to combine a low melting salt hydrate, for example $Na_2SO_4$ x 9 $H_2O$ with a melting point about 32 °C, with a solid acid, e.g. citric acid, which dissolves in the released water upon heating (phase transfer process). By this physical process, smaller temperature differences are sufficient to achieve power generation due to pH shifts.

The added thermolabile compounds play a key role based on their ability to form one or more protolysis equilibria and to provide conductivity at any selected temperature. They reversibly bind and release protons if cooled or heated, respectively. On the other hand, the quinone-dihydroquinone couples form an equilibrium, which depends on the pH in solution due to the fact that dihydroquinones release protons if oxidized at neutral pH ranging from 5 to 8 and quinones capture protons if reduced at acidic pH ranging from 0 to 4. Both equilibria influence each other, depending on temperature and pH in aqueous protic media.

More specifically, one quinone molecule receives two electrons and two protons when reduced to dihydroquinone. These two protons originate/are provided from the dihydroquinone in the other half cell. The thermolabile compound in combination with the appropriate temperature is only present in small amounts to preset and maintain an acidic pH value to keep the reaction running in terms of electrons flow through a conductive connection, provide sufficient conductivity of the electrolytes and migration of protons from the dihydroquinone to the quinone derivative through a separator between the two half-cells.

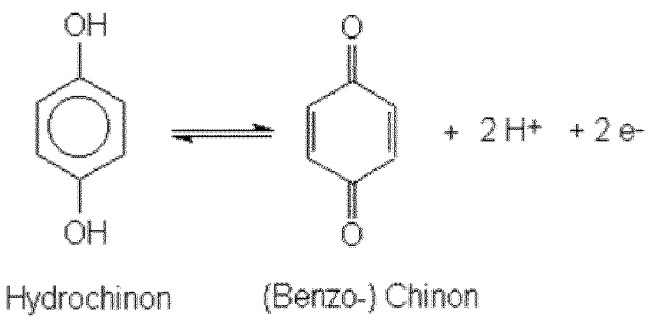

While the thermolabile compound is present in both half-cells of the device, the positive electrode electrolyte comprises the oxidized quinone derivative and the negative electrode electrolyte comprises the reduced dihydroquinone derivative.

The positive electrode half-cell and the negative electrode half-cell are linked to each other, such that the protons can migrate between the half-cells but not the quinone and dihydroquinone molecules, the thermolabile compounds, dissociation products of the thermolabile compounds, such as ammonium ions and anions, and also not any other product of the reversible decomposition of the thermolabile compound, such as ammonia, amine derivative and any anion formed by the release of one or more protons, which come into existence by heating the positive electrode

electrolyte and by the use of the device for converting thermal energy of an external heat source into electrical energy.

A core idea of the present invention lies in the generation and storage of electrical energy by reversible direct conversion of thermal energy through heat absorption into electrical energy and the possibility of heat storage, without the need of any external power sources. This is achieved by the device according to the present invention including the thermolabile compound in both half-cells. The device is, because of its unique character, in the following also named "Nernst Battery", "quaternary battery", "symmetrical quaternary battery", "unsymmetrical quaternary battery" (different types of quinones with different standard redox potentials E° in each half cell which allows for 2 different voltages per one cycle which may be favourable when the device is used as a battery), "organic quaternary battery", "poikilothermal generator" or "ectothermal cell".

The present invention also relates to a method of converting thermal energy into electrical energy by using said device. When the positive electrode electrolyte including the quinone and a thermolabile compound is heated to a temperature of 60 °C to 140 °C via an external heat source, and not the negative electrode electrolyte which is including the dihydroquinone and a thermolabile compound, a redox reaction is driven, whereby electrons flow through a conductive connection from the cold half-cell to the heated half-cell and $H^+$ ions flow through the separator from the cold half-cell to the heated other half-cell for charge balancing. Thereby a current flow is generated, which either allows for direct use, storage or power conversion of the same to convert direct current into alternating current, change the voltage and/or frequency of the current. Upon active or passive cooling of the previously heated positive electrode electrolyte and heating of the previously cold negative electrode electrolyte, the back reaction takes place, whereby again a redox reaction is driven between dihydroquinone in the cold half-cell and quinone in the heated half-cell and $H^+$ ions flow through the separator in the opposite direction. Thereby, a current flow is generated again through the conductive connection between the two half-cells, however in the opposite direction, allowing either for direct use, storage or power conversion of the same for a second time to convert direct current into alternating current, change the voltage and/or frequency of the current.

That is, the generation of electric energy is driven by a reversible and alternating change of temperatures in the half-cells in the direction from cold to hot, by making use of the working principle of the quinone-dihydroquinone redox couple in the presence of a thermolabile compound. This allows for harvesting electric energy twice per cycle, which greatly improves the efficiency of the device.

The heating and cooling steps can be repeated as often as required and can be interrupted and resumed at any point without damaging the device and without power loss or the occurrence of a memory effect. The device is capable of deep discharge and can be discharged to a final discharge voltage of 0 V without damage.

The device according to the present invention is modular, scalable, and voltages and currents can be adjusted by connecting two or more devices in series or in parallel. Therefore, the present invention also relates to a module comprising two or more of said devices. This allows the use of the device in e.g. households, industry and long-distance networks. Furthermore, the device according to the present invention simultaneously allows for the storage of thermal energy in the form of heat in one or both half-cells, which is of particular interest when stacking two or more devices according to the present invention to form the module according to the present invention.

Also, the device according to the present invention may be coupled to a capacitor, a superconducting magnetic energy storage system or an accumulator to form an energy saving system. The present invention also relates to such energy saving system for storing the electrical energy generated by the device.

In addition, the device may be used to form a battery. The present invention therefore also relates to a battery. The battery is structured in the same way as the device according to the present invention. That is, the battery comprises a positive electrode half-cell comprising a positive electrode and a positive electrode electrolyte; a negative electrode half-cell comprising a negative electrode and a negative electrode electrolyte; a conductive connection between the positive electrode half-cell and the negative electrode half-cell; and a quinone-dihydroquinone couple in the presence of a thermolabile compound as defined above in connection with the device.

In the discharged state of the battery, the positive electrode electrolyte comprises the oxidized quinone derivative as defined in claim 1 and further a thermolabile compound for conductivity, and the negative electrode electrolyte comprises the corresponding reduced dihydroquinone and further a thermolabile compound for conductivity.

In the charged state of the battery, the positive electrode electrolyte comprises the oxidized quinone derivative as defined above and further protons, ammonia or amines and anions for a changed cell potential linked to the changed pH value and for conductivity, and the negative electrode electrolyte comprises the corresponding reduced dihydroquinone and further a thermolabile compound for conductivity.

Furthermore, the positive electrode half-cell and the negative electrode half-cell are linked to each other, such that the protons can migrate between the half-cells but not the quinones, dihydroquinones, anions, ammonia or amines.

The battery allows storage of energy in a chemical form and conversion of the chemical energy into electrical energy when needed, i.e. upon usage of the battery, such as conventional batteries.

The present invention furthermore relates to a method of charging the battery. When the positive electrode electrolyte but not the negative electrode electrolyte, each including the thermolabile compound, is heated to a temperature of 60 °C to 140 °C via an external heat source under open circuit conditions, the battery is charged. The battery is fully charged as soon as all or a sufficient part of the thermolabile compound of the following formula has been thermally converted into protons, ammonia or amines and anions in a reversible reaction according to the following equation:

$$[R_1R_2R_3NH]^+X^- \rightleftharpoons R_1R_2R_3N + H^+ + X^-$$

With $[R_1R_2R_3NH]^+X^-$ being an ammonium salt and $R_1$,$R_2$,$R_3$ being hydrogen and/or alkyl group and/or aryl group and $X^-$ being an anion;

As soon as the battery is fully charged, the conductive connection between the two half-cells can remain interrupted. The charged battery comprises in the positive electrode electrolyte the quinone, protons, ammonia or amine and anions and in the negative electrode electrolyte dihydroquinone and the thermolabile compound. Protons, anions, ammonia or amines are thermodynamically stable at elevated temperature. At ambient temperature, the thermolabile compound is the thermodynamically stable component. Quinones and dihydroquinones are both stable at elevated and ambient temperature but unstable to changing pH values as an expression for proton concentrations in solution. However, because the conductive connection between the half-cells is interrupted, conversion to the thermodynamically stable components at changed temperature and changed pH values is prevented as long as the battery is stored, i.e. not in use.

Implemented thermal energy may thus be converted into chemical energy, which may be stored in that form and converted into electrical energy when needed. This is simply done by establishing a conductive connection between the positive electrode half-cell and the negative electrode half-cell upon usage of the battery. The battery generates electrical energy as long as the redox reaction takes place. As soon as the battery is discharged, i.e. all quinone has been reduced to dihydroquinone in the positive half-cell and all dihydroquinone has been oxidized to quinone in the negative half-cell, it may be charged again by active or passive cooling of the hot positive electrode half-cell and by implementing heat to the negative electrode half-cell. This may be repeated as often as desired without damaging the battery.

Detailed Description

*[Device for converting thermal energy of an external heat source into electrical energy]*

The present invention relates to a device for converting thermal energy of an external heat source into electrical energy comprising a positive electrode half-cell, a negative electrode half-cell, means for heating and optionally means for cooling the positive electrode electrolyte and/or negative electrode electrolyte and a quinone-dihydroquinone couple selected from the group consisting of un-substituted and/or alkyl-, hydroxy-, sulfonate-, amino-, halogen-substituted p-benzoquinones, p-benzodihydroquinones, o-benzoquinones, o-benzodihydroquinones, 1,4-naphthoquinones, 1,4-naphthalenediol, 1,2-naphthoquinones, 1,2-naphthalenediol, 9,10-anthraquinone, 9,10-dihydroxyanthracene, 9,10-phenanthrenequinone, 9,10-phenanthrenehydroquinone,
and in both electrode electrolytes a thermolabile compound of the following groups or formulas which releases reversibly at least one proton upon heating and binds it upon cooling according to the list above.

Quinones and their hydrogenated analogues dihydroquinones represent one of the most important groups of organic molecules set in chemistry and biology. They are readily available or can be synthesized from inexpensive commodity chemicals. Their use as redox-active organic molecules represents a new approach towards direct conversion of heat into electricity with high efficiency, high electrical energy density and at competitive cost.

The main recognized quinones are the benzoquinones, followed by naphthoquinones, anthraquinones and phenanthrenequinones, and their hydrogen replacement species, which may be further subdivided into two subgroups ortho- and para-. The main property of quinones and dihydroquinones is their ability to undergo electron transfer reactions. This property is technically used in the so-called "anthraquinone process" for the industrial production of hydrogen peroxide from 9,10-dihydroxyanthracene and molecular oxygen.

In general, the nature of electron transfer depends on substitution patterns and reaction media present. Substituents, for example, are known to decrease or increase the standard redox potentials E° relative to the un-substituted quinone. This effect is not relevant for the battery potential according to the invention as long as the identical quinone/hydroquinone couple is used in both half-cells. But different substituent patterns may be used to tune solubility, chemical stability and melting points of different derivatives according to the needs. [L. Horner E. Geyer, Zur Kenntnis der o-Chinone, XXVII., Redoxpotentiale von Brenzcatechin-Derivaten, Chemische Berichte, 1965, 98, pp. 2016-2045]

It is known from electrochemical studies that quinones show in aqueous buffer at acidic pH a reversible one-step two-electron reduction peak at distinctive potentials [Partha Sarathi Guin, Saurabh Das, and P.C. Mandal, Electrochemical Reduction of Quinones in Different Media: A Review, International Journal of Electrochemistry, 2011, pp. 1-22.].

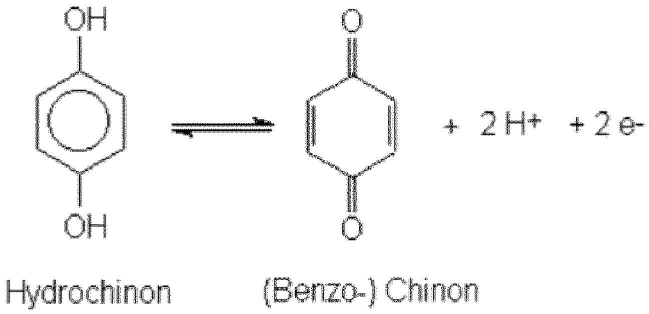


This behavior soon has become the basis of the well known "quinone/hydroquinone electrode" which was used to measure the hydrogen ion concentration of aqueous media.

In view thereof, the quinone-dihydroquinone couple in combination with a thermolabile compound used in the present invention is one selected from the group consisting of un-substituted and/or alkyl-, hydroxy-, sulfonate-, amino-, halogen-substituted p-benzoquinones, p-benzodihydroquinones, o-benzoquinones, o-benzodihydroquinones, 1,4-naphthoquinones, 1,4-naphthalenediol, 1,2-naphthoquinones, 1,2-naphthalenediol, 9,10-anthraquinone, 9,10-dihydroxyanthracene, 9,10-phenanthrenequinone, 9,10-phenanthrenehydroquinone. Preferably, the quinone-dihydroquinone couple is un-substituted and/or alkyl-, hydroxy-, sulfonate-, amino-, halogen-substituted p-benzoquinones, p-benzodihydroquinones, o-benzoquinones, o-benzodihydroquinones, 1,4-naphthoquinones, 1,4-naphthalenediol, 1,2-naphthoquinones, 1,2-naphthalenediol from the viewpoint of its availability, stability, molecular weight and solubility in common solvents. More preferably, the quinone-dihydroquinone couple is un-substituted and/or alkyl-, hydroxy-, sulfonate-, amino-, halogen-substituted p-benzoquinones, p-benzodihydroquinones, o-benzoquinones, o-benzodihydroquinones and most preferably un-substituted and/or alkyl-, hydroxy-, sulfonate-, amino-, halogen-substituted p-benzoquinones, p-benzodihydroquinones from the viewpoint of its availability, thermal stability, molecular weight and solubility within a temperature range being of particular interest when considering sustainable heat sources, such as heat waste.

In order to be able to generate electrical energy from these quinone-dihydroquinone couples and their reversible regeneration in a continuous manner, the addition of a thermolabile compound in both half-cells is necessary.

Thus, according to the invention, the thermolabile compound is present in both half-cells.

Preferably, the quinone-dihydroquinone couple is selected from the group consisting of un-substituted and/or alkyl-, hydroxy-, sulfonate-, amino-, halogen-substituted p-benzoquinones, p-benzodihydroquinones, o-benzoquinones, and o-benzodihydroquinones from the viewpoint of its low material costs, earth-abundant elements, good solubility, and attractive charge to mass ratio. More preferably, the quinone-dihydroquinone couple is selected from the group consisting of un-substituted and/or alkyl-substituted p-benzoquinones and p-benzodihydroquinones in view of its thermal stability, good accessibility, and non-toxicity.

Preferably, the quinone and/or dihydroquinone derivative in each half-cell is present in a concentration in the range of 0.1 mol/L to 12 mol/L, preferably 0.5 mol/L to 10 mol/L, more preferably in the range of 1 mol/L to 7 mol/L, even more preferably in the range of 1 mol/L to 5 mol/L with respect to the volume of the electrode electrolyte. The concentration of the quinone and/or dihydroquinone derivative is preferably in the above ranges with the viewpoint of performance of the device in terms of achieving excellent capacity and power density. Preferably, the concentration of the quinone and/or dihydroquinone derivative is not below 0.5 mol/L in view of the risk of a drop of cell efficiency. Preferably, the concentration of the quinone and/or dihydroquinone derivative is not above 12 mol/L in view of the risk of deposits.

Preferably, the thermolabile compound is present in a concentration in the range of 0.01 mol/L to 10 mol/L, preferably 0.01 mol/L to 5 mol/L, more preferably in the range of 0.05 mol/L to 4 mol/L, even more preferably in the range of 0.1 mol/L to 3 mol/L, particularly preferably in the range of 0.15 mol/L to 2 mol/L and most preferably in a concentration of 0.2 mol/L to 1 mol/L with respect to the volume of the electrode electrolyte. This is possible since only small amounts of the thermolabile compound relative to the used quinone-dihydroquinone couple are needed to ensure electrical conductivity of the electrolyte at any temperature and proton concentration adjustment by reversible release and binding of protons in the electrolyte according to the invention.

This is shown exemplary by the thermochemical cycle of ammonium acetate, which decomposes above 64 °C into acetic acid, which is in equilibrium with acetate and proton ions, and ammonia. Upon cooling the back reaction to ammonium acetate takes place.

$$CH_3CO_2^-(NH_4)^+ \rightleftharpoons [\ CH_3CO_2H + NH_3\ ] \rightleftharpoons CH_3CO_2^- + H^+ + NH_3$$

While at low temperatures acetate and ammonium ions are present, a sufficiently high temperature generates acetic acid, protons and ammonia from the ammonium species.

The released protons in the hot half-cell shift the redox potential of the quinone-dihydroquinone couple to more positive values relative to the cold half-cell and a potential difference between the two half-cells is generated.

Protons, needed in the one-step two-electron two-proton reduction of the quinone for charge balance, are transferred through a separator from the corresponding dihydroquinone in the other half-cell. With the viewpoint of performance of the device in terms of achieving fast reaction kinetics and excellent capacity, the concentration is preferably in the above ranges and the pKa value of the solvent and of the acid released by the selected thermolabile substance is lower than the pKa of the used dihydroquinone.

The thermolabile compound provides anions and cations at any temperature thus sufficient electrical conductivity is provided. Therefore, the addition of any other ionic compounds is not needed.

According to the present invention, the positive electrode half-cell and the negative electrode half-cell are linked to each other, such that the protons can migrate between the half-cells but not the thermolabile compound, not the decomposition products of the thermolabile compound and also not a quinone and dihydroquinone, which all come into existence by heating the positive electrode electrolyte and by the use of the device.

The electrolytes for the half-cells are chosen to provide a suitable solubility of quinone, dihydroquinone and the thermolabile compound as a source of the ions required to carry out the reactions in each half-cell.

In one embodiment of the invention, the positive electrode electrolyte and the negative electrode electrolyte are liquid electrolytes comprising the liquid quinone-dihydroquinone couples and a solvent for dissolving the quinone, dihydroquinone and the thermolabile compound which are present in the electrolytes. In that case, the device further comprises a separator interposed between the positive electrode half-cell and the negative electrode half-cell to separate the positive electrode electrolyte and the negative electrode electrolyte from each other.

The separator is not particularly limited as long as it is permeable with respect to the hydrogen ions but is impermeable to the quinone, dihydroquinone, thermolabile compound and dissociation species of the thermolabile compound, e.g. ammonium ions and anions, and also impermeable to the thermal decomposition species, e.g. anions, ammonia or an amine, which come into existence by heating the positive electrode electrolyte and by the use of the device. Thus, preferably, the separator is at least permeable with respect to $H^+$ for allowing fast and easy hydrogen ion migration from dihydroquinone to quinone molecules between the cold and the hot half-cell.

Suitable separators or barriers are made of a glass frit or any one of a poly(phenoxy phospazene) (POP), a sulfonated naphthalic polyimide, a polybenzimidazole (PBI), an alkylsulfonated polybenzimidazole (PBI-AS), a sulfonated poly(arylene ether ether ketone) (PEEK-$SO_3H$), a sulfonated poly(arylenesulfone) (PSU-$SO_3H$), a perfluoro sulfonic acid polymer and a nonfluorinated aliphatic or aromatic hydrocarbon-based polymer, such as polyether ether ketone and polybenzimidazole. Conventional separators include, e.g., Nafion 112 (Du Pont), New Selemion (HSF membrane) (Asahi Glass Co., Japan) and Gore Select P-03430-membrane (W. L. Gore).

The solvent used in the liquid electrolytes is not particularly limited as long as it is suitable to dissolve the quinones, dihydroquinones, thermolabile compounds and its thermal decomposition products of the electrolytes, supplies a protic environment, is thermo- and electrochemically stable and inert. That is, it does not participate in any reaction, does not cause precipitation, is stable under all operating conditions and is not subject to any other reactions or decompositions in the half-cells. Preferably, the solvent comprises an aqueous or non-aqueous solvent, ionic liquid, protic solvent, eutectic solvent, or mixtures of the aforementioned.

Preferably, aqueous or non-aqueous solvents may include water, dimethylsulfoxide dmso, dimethylformamide dmf, alkylnitrile, glycols, e.g. ethylene glycol, propylene glycol, diethylene glycol, and dipropylene glycol, polyethylene glycols, further glycol ethers, e.g. ethylene glycol alkyl ether or propylene glycol alkyl ethers, glycol ether esters, esters, alcohols, ketones and/or any combination thereof.

Examples include aqueous propylene glycol, dimethylethylene glycol, 1-propanol, 2-propanol or n-butanol.

In another preferred embodiment of the present invention, the solvent is a protic or non-protic ionic liquid IL. In case of a non-protic IL of the preferred embodiment the quinone is turned into an oil by building into ionic liquids as an electrochemical functionality to become soluble/miscible in ILs. An example of "quinone-functionalised ionic liquids" is composed of quaternary phosphonium ionic liquid cations and a quinone sulfonate anion: [(trihexyl-tetradecyl-phosphonium) (9,10-anthraquinone-2-sulfonate)], [P14,6,6,6][AQS]. (A.P. Doherty et al., Quinone Redox-active Ionic Liquids, J. Mex. Chem. Soc. 2015, 59(4), 263-268.).

In case of a protic IL the solvent consists of one or more different ammonium salts without being thermolabile. In another case the protic IL can be a thermolabile compound according to the invention. Examples of thermolabile compounds include triethylamin and acetic acid with molar ratios from 1:4 to 1:2 to form a monophasic liquid with the approximate composition $[NEt_3xHNEt_3^+[OAc_x(HOAc)_3]^-$ [P. Berton et al., Elucidating the triethylammonium acetate system: Is it molecular or is it ionic?, Journal of Molecular Liquids, Vol. 269, 2018, pp. 126-131.], ammonium acetate, mixtures of ammonium acetate and ammonium lactate, ammonium propionate or ammonium butyrate whereby the reversibly released ammonia or amine upon heating remains in the liquid mixture and undergoes back reaction to the

ammonium salts when cooled.

Further preferably, the solvent is a combination of water and one or more thermolabile compounds, such as a thermolabile ionic liquid IL. Examples includes a combination of water and ammonium lactate with ammonium acetate, or water and ammonium propionate which may be preferred in view of the relative high boiling point of up to 140 °C of the pure ammonium propionate.

In case the device including the liquid electrolyte is used at temperatures exceeding said temperature range, the apparatus may need to be constructed such that it can be pressurized, i.e. be sealed, in order to prevent the solvent and any other components from leaking out in gaseous form.

The solvent used in the liquid electrolytes of the positive electrode half-cell and the negative electrode half-cell may be the same or different.

Exemplified liquid electrolytes comprising a p-benzoquinone-1,4-dihydroquinone couple and ammonium acetate as the thermolabile compound and an aqueous solvent may have the following compositions:

The negative electrode electrolyte in the negative electrode half-cell may comprise 1 - 55 mol/L water, 1 - 13 mol/L propylene glycol, 0.1 - 15 mol/L ammonium acetate and 0.5 - 12 mol/L 1,4-dihydroquinone. The positive electrode electrolyte in the positive electrode half cell may comprise 1 - 55 mol/L water, 1 - 13 mol/L propylene glycol, 0.1 - 15 mol/L ammonium acetate and 0.5 - 12 mol/L p-benzoquinone.

Exemplified liquid electrolytes comprising p-benzoquinone, 1,4-dihydroquinone, ammonium propionate as solvent as well as thermolabile compound, and water may have the following compositions:

The negative electrode electrolyte in the negative electrode half-cell may comprise 1 - 55 mol/L water, 0.01 - 11 mol/L ammonium propionate and 0.5 - 12 mol/L 1,4-dihydroquinone. The positive electrode electrolyte in the positive electrode half cell may comprise 1 - 55 mol/L water, 0.01 - 11 mol/L ammonium propionate, and 0.5 - 12 mol/L p-benzoquinone.

In another embodiment of the invention, the positive electrode electrolyte and the negative electrode electrolyte are solid electrolytes comprising a proton conducting material. Examples of proton conducting materials include proton-conducting ceramics (PCCs), polyoxometalates (POMs), covalent organic frameworks (COFs), proton-conducting single crystals and organic polymers and/or any combination thereof.

Specific examples of PCCs include proton conducting perovskite-type doped alkaline earth cerates and zirconates, such as $BaZr_{0.9}Y_{0.1}O_3$, proton conducting fluorite-type ceramics, such as gadolinium doped cerium oxide $Ce_{0.9}Gd_{0.1}O_{(2-d)}$, as well as metal oxides, such as $TiO_2$.

Specific examples of POMs include 3D lanthanide silicotungstic acid proton conductors, such as $La_{0.67}(H_2O)La(H_2O)_6[\{La(H_2O)_3(SiW_{11}O_{39})\}]$ ▪ $7H_2O$, and Dodecatungstophosphoric acid crystals, such as $H_3PW_{12}O_{40}$ ▪ $H_2O$.

Specific examples of COFs include nanoporous membranes, which may be synthesized by reaction of 1,3,5-triformylphloroglucinol monomer and 2,6-dimethylbenzidine monomer.

Specific examples of proton-conducting single crystals include the following Beta-alumina with nominal composition $(NH_4^+)(H_3O^+)_{0.85}Al_{10.15}O_{17}$.

Specific examples of proton-conducting organic polymers include doped and/or undoped protonated polyaniline, polyethyleneimine (polyaziridine) and poly(allylamine).

Specific examples of proton-conducting combinations include composites of POM and poly(allylamine) PAA5000 with the chemical formula $K_8H_4[Bi(H_2O)P_5W_{30}O_{110}]$ ·0.03PAA5000 ·$19H_2O$.

Generally, the solid electrolyte comprises a proton source, such as a dihydroquinone and a thermolabile compound. Preferably, the proton source is a dihydroquinone and at least one proton-amine-compound, also known as an ammonium salt of ammonia or amine and an organic or inorganic acid. Particularly preferably, the dihydroquinone is one selected from the quinone-dihydroquinone couple.

Preferably, the solid electrolyte comprises a compound for reversibly binding protons. Examples include quinones selected from the quinone-dihydroquinone couple.

Generally, the solid electrolyte further comprises an inert heat and electron conducting material, such as graphite, carbon black, silicon and/or magnetite. Preferable is the use of graphite.

Optionally, it furthermore includes $SiO_2$ which is known to reversibly release protons upon heating, acting as a thermolabile compound, and for the reversible absorption of liquid components.

Exemplified solid electrolytes comprising a p-benzoquinone-1,4-dihydroquinone couple and an ammonium carboxylate as the thermolabile compound may have the following compositions:

The negative electrode electrolyte in the negative electrode half-cell may comprise 0.5 - 12 mol/L dihydroquinone, 0 - 11 mol/L doped or undoped polyaniline, pulverized POM, pulverized graphite.

The positive electrode electrolyte in the positive electrode half-cell may comprise 0.5 - 12 mol/L p-quinone, 0 - 11 mol/L doped or undoped polyaniline, pulverized POM, pulverized graphite.

In case of using the device in solid form, it is not mandatory to use a separator, but preferably, the two half-cells are separated by a barrier layer containing pure proton conducting material in order to avoid short circuiting of the device. Optionally, the device comprises a separator interposed between the positive electrode half-cell and the negative

electrode half-cell. Examples include those mentioned in connection with the liquid electrolytes and furthermore include separators made of PCC, POM, COF, single crystals and organic polymers in view of their thermal stability.

In yet another embodiment, the positive electrode electrolyte and the negative electrode electrolyte are low melting solid solvents or eutectic compounds. In that case, the device further comprises a separator interposed between the positive electrode half-cell and the negative electrode half-cell to separate the positive electrode electrolyte and the negative electrode electrolyte from each other.

The separator is not particularly limited as long as it is proton-permeable but is impermeable to the quinone, dihydroquinone, thermolabile compounds and their reversibly formed thermal decomposition products, which come into existence by heating the positive electrode electrolyte and by the use of the device. Examples include those mentioned in connection with the liquid electrolytes and solid electrolytes above.

The low melting solid solvent or low melting eutectic compounds are not particularly limited. In one embodiment, the low melting solid solvent includes alcohols, such as dodecanol, or polyethylene glycols, such as PEG 600, or carboxylic acids. In another embodiment, the low melting eutectic compounds include ionic liquids, such as a combination of ammonium acetate and ammonium lactate.

Exemplified low melting eutectic salt-based electrolytes comprising a quinone-dihydroquinone couple and a thermolabile compound may have the following compositions:
The negative electrode electrolyte in the negative electrode half-cell may comprise 1 - 55 mol/L water, 0.5 - 12 mol/L dihydroquinone, 0.1 - 11 mol/L ammonium lactate, 0.1 - 15 mol/L ammonium acetate, and 0 - 13 mol/L glycol. The positive electrode electrolyte in the positive electrode half-cell may comprise 1-55 mol/L water, 0.5 - 12 mol/L quinone, 0.1 - 11 mol/L ammonium lactate, 0.1 - 15 mol/L ammonium acetate and 0 - 13 mol/L glycol.

A device according to the invention comprising a solid electrode electrolyte or a low melting solid solvent or a low melting eutectic salt has the advantage that the components are thermally more stable and do not evaporate at higher temperatures, which would otherwise require pressure technology as explained above.

The means for heating and cooling of the device according to the invention are not particularly limited as long as they are suitable to deliver heating or cooling medium to the at least one electrolyte. Examples include any conventional internal or external heat exchangers, pipes, plates, sheets, panels, spirals, jackets, internal or external coils for conducting heating or cooling transfer medium.

In one embodiment of the invention, the device comprises means for cooling of the device. This is of particular interest when the device is scaled up so that passive cooling to ambient temperature, i.e. cooling through heat radiation to the environment, cooling fans or cooling fins, may either not suffice or would take too long.

The electrodes used in the device according to the invention are not particularly limited and can be selected from any suitable material. Preferably, the positive electrode and negative electrode are each made of silicon, an inert metal, magnetite, or each are a carbon-based electrode or carbon nanotube modified electrode made of materials, such as glassy carbon, graphite, pyrosealed graphite flow plates, carbon black (such as industrial carbon black), porous carbon, carbon paste, single-walled carbon nanotubes (SWCNTs), graphene nanosheets, Super P, recycled carbon, a combination of carbon and silicon or each are a carbon paper electrode from the viewpoint of performance as well as thermal and chemical resistance. The inert metal means a metal being stable against acids (protons), the used quinone-dihydroquinone couple and the thermolabile compound as well as the reversibly formed thermal decomposition products. Examples of inert metals include platinum, tantalum, titanium and gold.

The cell walls and other parts of the device are not particularly limited and can be made from suitable organic or inorganic materials, such as steel, and/or comprise an inside coating. Preferably, the inside coating is made at least from one of Enamel, glass, graphite, polyvinyl chloride pvc, polyethylene pe, polypropylene pp, polyvinylidenifluoride (PVDF), polyvinylidenifluoride-hexafluoropropylene (PVDF-HFP), fluororubber, such as FPM and FFKM, ethylene chlorotrifluoroethylene (ECTFE), ethylene tetrafluoroethylene (ETFE), fluorinated ethylene propylene (FEP), tetrafluoroethylene perfluoromethylvinylether (MFA), polychlorotrifluoroethylene (PCTFE), perfluoroalkoxy alkanes (PFA), Teflon (PFTE) or a polyamide from the viewpoint of thermal and chemical resistance.

[*Method of converting thermal energy into electrical energy by using the device*]

The present invention further relates to a method of converting thermal energy into electrical energy by using the device as described above, comprising:

1) establishing a conductive connection between the positive electrode half-cell and the negative electrode half-cell so that electrons can migrate between the half-cells;
2) heating of the positive electrode electrolyte with the quinone derivative "Q" via an external heat source to a temperature of 60 °C to 140 °C and active or passive cooling of the negative electrode electrolyte with the corresponding dihydroquinone derivative "$H_2Q$" to a temperature below 50 °C, thereby driving a reaction of the following equations:

$$Q + 2\,e^- + 2\,H^+ \rightarrow H_2Q$$

(positive electrode half-cell)

$$H_2Q \rightarrow Q + 2\,e^- + 2\,H^+$$

(negative electrode half-cell) with Q and $H_2Q$ being as defined above,

$e^-$ being a negative electric charge,
$H^+$ being protons,
and thereby generating a current flow;

3) active or passive cooling of the previously heated positive electrode electrolyte and heating of the previously cooled negative electrode electrolyte to a temperature at which the back reaction according to the following equations takes place:

$$H_2Q \rightarrow Q + 2\,e^- + 2\,H^+$$

negative (previously positive) electrode half-cell

$$Q + 2\,e^- + 2\,H^+ \rightarrow H_2Q$$

positive (previously negative) electrode half-cell with $H_2Q$ and Q being as defined above,
and thereby generating a current flow in the opposite direction to the current flow generated in step 2).

This principle is based on temperature switch. When switching between two different temperatures as operating points, there is a reversible change in the chemical equilibrium of the thermolabile compound leading to a pH drop at elevated temperature. The reason for this is that for these systems there is a temperature at which their so-called Gibbs energy, also known as free enthalpy, is 0 joules. Any change above or below this specific temperature causes the free enthalpy to change to positive or negative values. The altered pH value in one half-cell compared to the other one, changes the redox potential between the quinone-dihydroquinone couples, which are present in the two half-cells.

As a result, the system never is in equilibrium at any operating point, leading to the generation of a current flow between the two half-cells, whereby electrical energy may be harvested.

Upon heating one of the electrolytes, electrons can flow from the negative electrode half-cell to the positive electrode half-cell via a conductive connection between both half-cells and electrical energy is generated in the form of a current flow.

After cooling the previously heated electrolyte and heating the previously cooled electrolyte, a pH difference is generated in the opposite direction and electrons flow back from the positive electrode half-cell to the negative electrode half-cell via the conductive connection and energy is generated again.

The device therefore supplies electrical energy permanently, i.e. upon heating and upon cooling in an alternating manner so that one half-cell is heated while the other half-cell is cooled, whereby the heating and cooling steps can be repeated as often as required and can be interrupted and resumed at any point without damaging the device.

This unique process allows harvesting electrical energy twice per cycle. That is, electrical energy produced by the current flow generated in steps 2 and 3 may either be directly used, stored or be subject of power conversion after step 2 and before step 3 and/or after step 3 of the method according to the invention.

Alternatively, it is possible to establish an open circuit between the positive electrode half-cell and the negative electrode half-cell so that electrons cannot migrate between the half-cells.

If heating of the positive electrode electrolyte with the quinone derivative via an external heat source to a temperature of 60 °C to 140 °C and active or passive cooling of the negative electrode electrolyte with the corresponding dihydroquinone derivative to a temperature below 50 °C is applied, charging of the device has been accomplished under open circuit condition.

A current flow can be generated at any time as soon as a conductive connection will be established thus allowing for the storage of thermal energy in at least one half-cell and transformation into electrical energy when it is needed.

A further advantage of the system is that there is no risk of a "thermal run-away". The reaction in the heated half-cells, which can be described as being a reduction or hydrogenation, is an exothermic process and that in the cooled half-cells, which can be described as being an oxidation or dehydrogenation, is an endothermic process. An overheating of the heated half-cells and/or overcooling of the cooled half-cells might happen if the active/passive cooling or heating

is slower than the adiabatic temperature development due to the chemical processes during harvesting of electrical energy. This can be avoided by interruption of the conductive connection between the positive electrode half-cell and the negative electrode half-cell at any time.

Additionally, excess heat and cold may also be transferred between the hot and the cold half-cells and/or to other devices which further increases the efficiency. Due to these controllable and supporting effects, namely self-heating of the hot electrolyte and self-cooling of the cold electrolyte, the system is not only safe but also self-sustaining and highly energy-efficient.

The temperature supplied to the at least one electrolyte for heating is in the range of 40 °C to 220 °C, preferably in the range of 50 °C to 200 °C, more preferably in the range of 55 °C to 180 °C, even more preferably in the range of 60 °C to 160 °C and particularly preferably in the range of 60 °C to 140 °C.

The temperature may vary depending on the thermolabile compound used in the system.

In case of ammonium salts derived from ammonia or from an amine and a carboxylic acid derivative, such as ammonium acetate, ammonium propionate, or ammonium lactate temperatures in the range of 40 - 220 °C may be used. More preferably, a temperature between 60 °C and 140 °C is supplied to one electrolyte in view of the thermal decomposition temperature of the ammonium compound.

In case of diammonium sulfates derived from ammonia or from an amine and sulfuric acid, such as diammonium sulfate, di(methylammonium) sulfate, or di(dimethylammonium) sulfate, or di(trimethylammonium) sulfate temperatures in the range of 80 - 180 °C may be used. More preferably, a temperature between 90 °C and 140 °C is supplied to one electrolyte in view of the thermal decomposition temperature of the diammonium sulfate compound.

In case of diammonium hydrogenphosphate derived from ammonia or from an amine and phosphoric acid, such as diammonium hydrogenphosphate, di(monomethylammonium) hydrogenphosphate, di(dimethylammonium) hydrogenphosphate, or di (trimethylammonium) hydrogenphosphate temperatures in the range of 60 - 160 °C may be used. More preferably, a temperature between 70 °C and 120 °C is supplied to one electrolyte in view of the thermal decomposition temperature of the diammonium hydrogenphosphate compound.

The temperature of the previously heated positive electrode electrolyte in step 3) at which the back reaction of the redox reaction takes place is below 90 °C, preferably is below 70 °C, more preferably is below 55 °C, even more preferably is in the range of -10 °C to 50 °C and particularly preferably is in the range of 0 °C to 40 °C.

Preferably, there is sufficient temperature difference between the heating and the cooling in step 2) and step 3) of 20 °C or more, preferably 30 °C or more, more preferably 40 °C or more, even more preferably 50 °C or more and particularly preferably 60 °C or more.

Thus, where needed, the conductive connection between the positive electrode half-cell and the negative electrode half-cell can be interrupted. This might, e.g., be of additional advantage during heating of the electrolyte of the one half-cell in case heat may not, not constantly or not sufficiently be supplied with a certain temperature. The same is also applicable until the electrolyte of the other half-cell of the system is cooled to a desired temperature before again establishing the conductive connection.

The external heat source used in the method of the invention is not particularly limited and any kind of heat may be supplied to the system. In a preferred embodiment of the invention, the external heat source is heat waste, solarthermy, geothermy, nuclear fission at a nuclear power plant or in spacecrafts, or is nuclear fusion. Heat waste, solarthermy and geothermy are preferable in viewpoint of representing sustainable sources.

In a further preferred embodiment of the invention, the cooling is effected by the use of ambient or cooled air or other gaseous or liquid medium suitable for cooling, heat radiation to surrounding environment, a molten salt or evaporation of a fluid, such as water. Depending on the size of the device, cooling may be effected in a passive way, meaning that the device is not actively cooled, but allowed to cool to ambient temperature, or may be effected in an active way.

Cooling may be effected either in a passive or an active manner. Passive cooling means letting the system cooling down to ambient temperature by heat radiation to the surrounding environment. This may e.g. be implemented if the device is in a small version. Active cooling means the supply of cooling medium to the device. This is of particular interest if the device is scaled up and/or two or more devices are connected to form a module.

*[Module]*

The present invention further relates to a module comprising two or more devices according to the present invention. This allows the device to be scaled up to any desired size finding a wide range of applications. The module may, e.g., be used as power source for households, as energy source for industry, or for long-distance networks as feed-in and/or intermediate storage device.

The two or more devices are thereby electrically connected in series and/or in parallel, allowing for the adjustment of the voltage and current of the device/module.

Furthermore, due to the modular design, already heated electrolytes may be used to preheat cold electrolytes,

which may halve the amount of heat needed to heat the electrolytes by about up to 116 $MJ/m^3$.

[*Energy saving system*]

The present invention further relates to an energy saving system, comprising the device according to the invention and a capacitor, a superconducting magnetic energy storage system or an accumulator coupled to the device for storing the electrical energy generated by said device.

This design allows for the storage of the produced electrical energy without the need of direct use.

The capacitor, the superconducting magnetic energy storage system and the accumulator are not particularly limited, and any conventional system known for the storage of electricity may be used.

*[Battery]*

The present invention further relates to a battery, comprising a positive electrode half-cell comprising a positive electrode and a positive electrode electrolyte; a negative electrode half-cell comprising a negative electrode and a negative electrode electrolyte; a conductive connection between the positive electrode half-cell and the negative electrode half-cell; and a quinone-dihydroquinone couple and a thermolabile compound as defined above, wherein in the discharged state of the battery, the positive electrode electrolyte comprises a quinone derivative or a quinone-dihydroquinone derivative mixture and at least one thermolabile compound as defined in claim 1, and the negative electrode electrolyte comprises the same or a different dihydroquinone derivative or dihydroquinone-quinone derivative mixture and the same or a different of the at least one thermolabile compound and in the charged state of the battery, the hot positive electrode electrolyte comprises the quinone derivative, the thermolabile compound and the thermal decomposition products protons, ammonia or amines and anions, and the cold negative electrode electrolyte comprises the dihydroquinone derivative and the thermolabile compound, wherein the positive electrode half-cell and the negative electrode half-cell are linked to each other, such that the protons can migrate between the half-cells but not the quinones, dihydroquinones, thermolabile compounds and not the products other than protons of the reversible thermal decomposition of the thermolabile compounds.

The battery allows storage of energy in a thermal and chemical form and conversion of the thermal and chemical energy into electrical energy when needed, i.e. upon usage of the battery, such as conventional batteries. Alternatively, the battery may be used as part of an energy transmission grid, a power plant, and industrial or residential heating etc.

Since the battery and the device are structured in the same way, all embodiments and preferred embodiments described above in connection with the device according to the invention also do apply to the battery.

[*Method of charging the battery*]

The present invention further relates to a method of charging the battery by converting thermal energy of an external heat source into chemical energy, comprising

1) establishing an open circuit condition between the positive electrode half-cell and the negative electrode half-cell so that electrons can migrate between the half-cells;

2) heating of the positive electrode electrolyte via an external heat source to a temperature of 90 °C to 220 °C for a time period of 1 minute to 5 hours, thereby driving a reaction according to the following equation in the hot half-cell:

$$R\text{-}CO_2^-(HNR^1R^2R^3)^+ \rightarrow RCO2^- + H^+ + NR^1R^2R^3$$

with R, $R^1$, $R^2$ and $R^3$ being as defined above;
The battery is fully charged once the required minimum temperature has been reached in the electrolyte or electrolytes. Kinetic inhibitions are not to be expected. Depending on the heating medium used, it is assumed that the battery is charged within 1 min to 5h.

The charged battery comprises in the heated positive electrode electrolyte the quinone derivative, the thermolabile compound and its thermal decomposition products including protons. These components are thermodynamically stable at elevated temperature and the protons lead to a change of the oxidation potential of the positive electrode electrolyte to higher values. The charged battery comprises in the cold negative electrode electrolyte the dihydroquinone derivative and the thermolabile compound, which are the thermodynamically stable components at ambient temperature. However, because the conductive connection between the half-cells is interrupted at elevated temperature in one half-cell, conversion of the quinone with the dihydroquinone components is prevented as long as the battery is stored, i.e. not in use.

Implemented thermal energy may thus be converted into chemical energy, which may be stored in that form and converted into electrical energy when needed. This is simply done by establishing a conductive connection between the positive electrode half-cell and the negative electrode half-cell upon usage of the battery. The battery generates electrical energy as long as the redox reaction takes place. As soon as the battery is discharged, i.e. all quinone in the hot half-cell has been reduced and all dihydroquinone in the cold half-cell has been oxidized, it may be charged again by implementing cooling of the formerly heated half-cell and heat to the formerly cold half-cell. This may be repeated as often as desired without damaging the battery.

In a preferred embodiment of the invention, the external heat source is heat waste, solarthermy, geothermy, nuclear fission at a nuclear power plant or in spacecrafts, or is nuclear fusion. Heat waste, solarthermy and geothermy are preferable in viewpoint of representing sustainable sources.

In a further preferred embodiment of the invention, the cooling is effected by the use of ambient or cooled air or other gaseous or liquid medium suitable for cooling, heat radiation to surrounding environment, a molten salt or evaporation of a fluid, such as water. Depending on the size of the device, cooling may be effected in a passive way, meaning that the device is not actively cooled, but allowed to cool to ambient temperature, or may be effected in an active way.

The present invention will now be explained in detail on specific thermolabile compounds and quinone-dihydroquinone couples, by way of non-limiting example only.

[*Calculation of cell voltages, half-cell potentials and electrical energy*]

When implementing, for example, the p-quinone-1,4-dihydroquinone couple and ammonium acetate as the thermolabile compound (proton delivering), the following overall reactions take place in both half-cells:

Hot positive electrode electrolyte:

$$CH_3CO_2NH_4 \rightarrow CH_3CO_2^- + H^+ + NH_3\text{; resulting pH 2}$$

Cold negative electrode electrolyte:

$$H_2Q \rightarrow Q + 2\,H^+ + 2\,e^-\text{; resulting pH 7}$$

Hot positive electrode electrolyte, at pH 2:

$$Q + 2\,H+ + 2\,e^- \rightarrow H_2Q$$

Total:

$$\text{Total:} \quad H_2Q(\text{cold}) + Q(\text{hot}) \rightleftharpoons Q(\text{cold}) + H_2Q(\text{hot})$$

Standard reduction half-cell potentials of the half-cell reactions according to the literature are as follows:

pH 7: V = 0.29 V
pH 2: V = 0.59 V

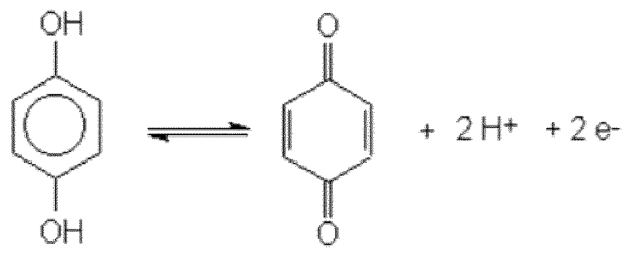


Hydrochinon (Benzo-) Chinon

For battery voltage calculations the standard potentials E° can be omitted since they cancel out in case the same quinone-dihydroquinone species are used in both cells. Differences in electrode potentials of the half-cell reactions according to the literature and to the Nernst equation are as follows:

$$E = E^0 + \frac{0,059\ V}{2} \cdot \lg\frac{[Ch]\cdot[H^+]^2}{[ChH_2]}$$

$E = \Delta V = 0.059\ V \times \Delta pH = 0.059\ V \times (7-2) = 0.059\ V \times 5 = 0.3\ V$

This results in a cell voltage U of 0.3 V using given conditions.

The known heat dependence of voltage reduces voltage output by 0.7 mV/K temperature increase (E. Biilmann, I. Krarup, The Temperature Coefficient of the Quinhydrone Electrode, Jour. Chem. Soc. 1924, [London] 125: pp. 1954-1956) but it is a comparably minor effect and may be compensated by faster kinetics, higher pH differences and electrical conductivity at elevated temperature.

In case a different quinone-dihydroquinone couple is used in each half-cell the two specific standard reduction potentials $E_1^0$ and $E_2^0$, respectively, have to be inserted into the Nernst equation to calculate the cell voltages.

Assuming a heating temperature $T_H$ of 130 °C (403 K), which is an optimal temperature in view of the thermal decomposition temperature of the group of ammonium carboxylates, and a cooling temperature $T_K$ of 15 °C (288 K), i.e. optimal conditions, the Carnot efficiency w may be calculated according to the following formula:

$$w = (T_H - T_K)/T_H$$

$$w = (403\ K - 288\ K)/403\ K$$

$$w = 0.29$$

The theoretically maximum possible efficiency η of the conversion of thermal energy into electrical energy is obtained from the quotient of electrical work W and overall heat energy Q, with Q being composed of chemical heat energy $Q_R$ and of energy for heating of the electrode electrolytes $Q_M$ according to the following formula:

$$\eta = W / Q$$

$$Q = Q_R + Q_M$$

By way of comparison the chemical heat energy needed for the thermal decomposition of the thermolabile compound is negligible.

According to A. Fattahi et al., "The Enthalpies of Formation of o-, m-, and p-Benzoquinone: Gas-Phase Ion Energetics, Combustion Calorimetry, and Quantum Chemical Computations Combined", J. Am. Chem. Soc. 2005, 127, 16, pp. 6116-6122, the heats of hydrogenation $\Delta_{hyd}H^0$, derived from combined results of gas-phase measurements in thermodynamic cycles, are as follows:

o-benzoquinone: 42.8 +/- 4.1 kcal/mol (= - 179 kJ/mol)
p-benzoquinone: 38.5 +/- 3.0 kcal/mol (= - 161 kJ/mol)

Thus, with 1 cal = 4.18 J, the chemical heat energy $Q_R$ is-161 kJ/mol for the reversible conversion of p-benzoquinone into 1,4-dihydroxybenzene and - 179 kJ/mol for the conversion of o-benzoquinone into 1,2-dihydroxybenzene.

Based on the chemistry in each single half-cell according to the invention, the combined net chemical heat energy $Q_R$ balance of the reductive hydrogenation of quinones in one half-cell and of the oxidative dehydrogenation of dihydroquinones in the other half-cell per half-cycle is zero. This applies to both half-cycles by reason of the identical chemistry. In terms of efficiency, while the chemical heat energy released in the positive electrode half-cell does not contribute to losses, the same amount of chemical heat energy is consumed in the negative half-cell and might be subject of compensation by a heat source.

The largest loss factor of the theoretical maximum efficiency is the heating temperature required to heat up the electrolyte or electrolytes per cycle. A temperature change from 298 K to 403 K, for example, results in heat inputs per

$m^3$ of about estimated 2.2 MJ/K × 105 K = 231 MJ for the pure electrolyte. Furthermore, also the concentration of the quinone-dihydroquinone couples plays an important role when determining the efficiency.

Conversion of elementary charge into electrical energy may be calculated as follows:

$$1 \text{ electron} = 1.60218 \times 10^{-19} \text{ coulombs C}$$

The energy density at 1 mol/L, corresponding to 2 mol electrons/L, is 2 × 96485 C = 53.6 Ah.

Using the average voltage U between the half-cells of 0.3 V, this gives a maximum expected electric work W of:

$$W_{1mol} = 0.3 \text{ V} \times 53.6 \text{ Ah} = 16.08 \text{ Wh} = 57.888 \text{ kJ/mol}$$

When assuming an initial concentration of a selected quinone derivative in the positive electrode half-cell to be 1.5 mol/L and considering losses in terms of a respective heat input, the efficiency per cycle may be calculated as follows:

$$[1 \text{ (alternating heating + cooling)} \times 1.5 \text{ (1.5 mol/L Q)} \times 1 \text{ (2 electrons per mol Q)} \times 57.888 \text{ MJ}] / [231 \text{ MJ}] = 1.5 \times 57.888 / 231 = 0.38$$

The efficiency per cycle therefore realistically is 38 %.

Due to a modular design, already heated electrolytes may be used to preheat cold electrolytes, thereby halving the amount of heat needed to heat the electrolytes by about 116 MJ/$m^3$, i.e. by 50 %. Thus, the modular design may bring an electrolyte heat recovery of up to 50 %.

The efficiency of such a cycle with 50% electrolyte heat recovery may be calculated as follows:

$$[1 \text{ (alternating heating + cooling)} \times 1.5 \text{ (1.5 mol/L Q)} \times 1 \text{ (2 electrons per mol Q)} \times 57.888 \text{ MJ}] / [116 \text{ MJ}] = 1.5 \times 57.888 / 116 = 0.75$$

The efficiency in that case realistically is 75 %.

A further increase in efficiency is possible if the chemical heat energy, which is released in the positive electrode electrolyte by the hydrogenation of a quinone derivative, is partly or entirely used to heat the other half-cell, other devices or modules.

An extra increase in efficiency is possible if the chemical heat energy, which is consumed in the negative electrode electrolyte by the dehydrogenation of a dihydroquinone derivative, is used to cool the other half-cell, other devices or modules, if needed.

Optionally, the generated cold can also be used to support refrigeration units, be released to the environment or be compensated by heating.

When assuming a concentration of quinone in the positive electrode half-cell to be 1.5 mol/L and of dihydroquinone in the negative electrode half-cell to be 1.5 mol/L, the electrical work W of the device according to the invention is 24 Wh. Modular design and/or adjustment of the concentration of quinone allows the volumetric energy density to be set accordingly.

Expected efficiency and power density are higher compared to previously reported systems capable of directly converting heat to electrical energy. This makes economical operation of such a heat-to-electricity converting system possible for the first time.

The present invention will now be explained in more detail by referring to specific embodiments.

[Specific *embodiments*]

Embodiment 1:

A device according to the invention is used. The quinone-dihydroquinone couple is 1,4-benzoquinone-sulfonic acid sodium salt and 1,4-dihydrobenzoquinone-sulfonic acid sodium salt and the thermolabile compound is diammonium sulfate. The electrodes are each a carbon-based electrode made of, e.g., graphite. The separator is a Nafion 112 (Du Pont) separator. The electrolytes used are aqueous organic solvents with the following compositions:
The negative electrode electrolyte in the negative electrode half-cell comprises 1 - 55 mol/L water, 0 - 15 mol/L ethylene glycol, 0.2 - 6 mol/L 1,4-dihydrobenzoquinone-sulfonic acid sodium salt, and 0.01 - 15 mol/L diammonium sulfate.

More specifically, the positive electrode electrolyte in the positive electrode half-cell comprises 1 - 55 mol/L water, 0 - 15 mol/L ethylene glycol, 0.2 - 6 mol/L 1,4-benzoquinone-sulfonic acid sodium salt and 0.01 - 15 mol/L diammonium sulfate.

The device walls and other parts of the device are made of steel or polymer and optionally having a polymer inside coating.

The device operates as follows:
First, a conductive connection between the positive electrode half-cell comprising the positive electrode electrolyte and the negative electrode half-cell comprising the negative electrode electrolyte is established. In a second step, heat from an external heat source in a temperature range of 90 °C to 120 °C is supplied to the positive electrode electrolyte via a heat exchanger. The device is pressurized in case of need in order to be able to reach higher temperatures without solvent leakage in gaseous form. Thereby, a reaction of the following equation is driven in the positive electrode electrolyte:

$$(NH_4)_2SO_4 \rightarrow H^+ + NH_3 + (NH_4)SO_4^-$$

which starts the following reaction:

$$H_2Q(cold) \rightarrow Q(cold) + 2\ H^+ + 2\ e^-$$

$$Q(hot) + 2\ H^+ + 2\ e^- \rightarrow H_2Q(hot)$$

$H_2Q$: 1,4-dihydrobenzoquinone-sulfonic acid sodium salt

Q: 1,4-benzoquinone-sulfonic acid sodium salt

whereby a current flow from the negative electrode half-cell to the positive electrode half-cell is generated.

The thus produced electrical energy may either be directly used, i.e. by passing the electrical energy through a consumer or may be stored by passing the electrical energy through a capacitor, a superconducting magnetic energy storage system or an accumulator.

Simultaneously, protons $H^+$ flow through the separator from the negative electrode electrolyte to the positive electrode electrolyte for charge balancing.

In a third step, the previously cold negative electrode electrolyte is heated and the previously heated positive electrolyte is cooled in an active manner by supplying cooling medium to the hot electrolyte to a temperature between 0 °C and 50 °C and heating medium to the cold electrolyte. Alternatively, in case the device is small sized or designed with a large surface-to-volume ratio, passive cooling may be effected by letting the system cool down to ambient temperature via heat radiation and/or conduction and/or convection to the environment. In either case, reactions according to the following equations take place in the cold and in the hot electrode electrolytes and between the half-cells, respectively:

Cold electrode electrolyte:

$$H^+ + NH_3 + [(NH_4)\ SO_4]^- \rightarrow (NH_4)_2SO_4$$

Hot electrode electrolyte:

$$(NH_4)_2SO_4 \rightarrow H+ + NH_3 + [(NH_4)SO_4]^-$$

$$H_2Q(cold) \rightarrow Q\ (cold) + 2\ H^+ + 2\ e^-$$

$$Q(hot) + 2\,H^+ + 2\,e^- \rightarrow H_2Q(hot)$$

whereby a current flow is generated in the opposite direction to the current flow generated in the second step, i.e. from the cold electrode half-cell to the heated electrode half-cell.

The thus produced electrical energy may be directly used, i.e. by passing the electrical energy through a consumer or may be stored by passing the electrical energy through a capacitor, a superconducting magnetic energy storage system or an accumulator for a second time.

Simultaneously, protons $H^+$ flow through the separator from the cold electrode electrolyte to the hot electrode electrolyte for charge balancing.

The mode of action of the novel system can be explained by the fact that the dihydroquinone compound is thermodynamically more stable than the quinone species in acidic media when conductively connected with a dihydroquinone compound in neutral pH media in accordance with the pH dependent reversible redox reaction of a quinone-dihydroquinone couple since protons are involved in the cell reactions:

$$H_2Q(\text{cold, neutral pH}) + Q(\text{hot, acidic pH}) \rightarrow Q(\text{cold, neutral pH}) + H_2Q(\text{hot, acidic pH})$$

That is, the generation of electric energy is driven by a reversible change of temperatures linked to a change of pH values in the half-cells in both directions, i.e. from cold to hot, by making use of the working principle of the thermolabile compound being the source of protons $H^+$. This allows for harvesting electric energy between the half-cells in both directions and twice per cycle, which greatly improves the efficiency of the device.

The heating and cooling steps can be repeated as often as required and can be interrupted and resumed at any point without damaging the device and without power loss or the occurrence of a memory effect. The device is capable of deep discharge and can be discharged to a final discharge voltage of 0 V without damage, thereby improving cycle life.

The system not only allows for the storage of electrical energy, but for the storage of heat as well, which is of particular advantage when stacking two or more devices to form a module. The device is free of any toxic, rare and cost-effective materials and enables, because of its simple design, a user-friendly commissioning.

Embodiment 2:

The device is the same as described in Embodiment 1, except that a glass frit as a separator, diammonium hydrogenphosphate as the thermolabile compound and aqueous liquid electrolytes with the following compositions have been used.

The use of a glass frit as an inexpensive and robust separator makes the device even more economical efficient. This is possible since in most cases, the positive electrode electrolyte and the negative electrode electrolyte contain the same thermolabile compound and electrochemical active quinone / dihydroquinone couple. Therefore, minor changes in cell concentrations caused by smaller substance leaks through the separator between the half-cells are not critical in terms of device integrity, efficiencies or performances.

The negative electrode electrolyte in the negative electrode half-cell comprises 1 - 55 mol/L water, 0.1 - 5 mol/L 1,4-dihydrobenzoquinone-3,5-disulphonic acid disodium salt, and 0.1 - 15 mol/L diammonium hydrogenphosphate.

The positive electrode electrolyte in the positive electrode half-cell comprises 1 - 55 mol/L water, 0.1 - 5 mol/L 1,4-benzoquinone-3,5-disulphonic acid disodium salt, and 0.1 - 15 mol/L diammonium hydrogenphosphate.

The device operates in the same manner as described in Embodiment 1.

Embodiment 3:

The device is the same as described in Embodiment 1, except that a t-butyl-benzoquinone / t-butyl-dihydrobenzoquinone couple and a thermolabile compound, which serves as solvent and as ionic liquid, is used. This allows for the operation without additional solvent but water to inhibit undesirable side reactions, such as the formation of carboxylic acid amide. The electrolytes have the following compositions:
The negative electrode electrolyte in the negative electrode half-cell comprises 1 - 55 mol/L water, 0.5 - 8 mol/L t-butyl-dihydrobenzoquinone, and 0.1 - 15 mol/L ammonium propionate.

The positive electrode electrolyte in the positive electrode half-cell comprises 1 - 55 mol/L water, 0.5 - 8 mol/L t-butyl-benzoquinone, and 0.1 - 15 mol/L ammonium propionate.

Otherwise, the device operates in the same manner as described in Embodiment 1.

Embodiment 4:

The device is the same as described in Embodiment 3, except that a liquid quinone-dihydroquinone couple has been used, which is known to allow the operation without or with reduced amounts of a solvent to increase energy density. The presence of small amounts of water between 0.1 and 12 mol/L is preferred to provide a protic electrolyte and to avoid irreversible side reactions, such as dehydration reactions.

The device operates in the same manner as described in Embodiment 1.

Embodiment 5:

The device is the same as described in Embodiment 1, except that an unsubstituted quinone-dihydroquinone couple and electrolytes other than in Embodiment 1 have been used.

The negative electrode electrolyte in the negative electrode half-cell comprises 1 - 55 mol/L water, 0.5 - 10 mol/L n-butanol, 0.5 - 12 mol/L dihydrobenzoquinone, and 0.1 - 15 mol/L cyclohexane-1,2-diamine monoacetate and/or cyclohexane-1,2-diamine diacetate.

The positive electrode electrolyte in the positive electrode half-cell comprises 1 - 55 mol/L water, 0.5 - 10 mol/L n-butanol, 0.5 - 12 mol/L benzoquinone, and 0.1 - 15 mol/L cyclohexane-1,2-diamine monoacetate and/or cyclohexane-1,2-diamine diacetate.

Otherwise, the device operates in the same manner as described in Embodiment 1.

Embodiment 6:

The device is the same as described in Embodiment 3, except that a low melting eutectic ammonium acetate ammonium lactate mixture as thermolabile compound has been used to increase liquid phase range to reduce the amount of solvent.

Otherwise, the device operates in the same manner as described in Embodiment 3.

Embodiment 7:

The device is the same as described in Embodiment 5, except that a different quinone-dihydroquinone couple in each half-cell has been used. In that case, different voltages are generated per cycle depending on the direction of the current flow.

This unsymmetrical design allows for the generation of a higher voltage and thus higher energy density in one direction compared to the other direction which may be favourable in case the device is used as a battery.

The negative electrode electrolyte in the negative electrode half-cell comprises 1 - 55 mol/L water, 0.5 - 10 mol/L 1,2-propylene glycol, 0.5 - 9 mol/L 2,5-dimethyl-p-dihydrobenzoquinone (standard reduction potential E° of the 2,5-dimethyl-p-dihydrobenzoquinone / 2,5-dimethyl-p-benzoquinone couple is 0.60 V), and 0.1 - 15 mol/L ammonium propionate.

The positive electrode electrolyte in the positive electrode half-cell comprises 1 - 55 mol/L water, 0.5 - 10 mol/L 1,2-propylene glycol, 0.5 - 9 mol/L benzoquinone (standard reduction potential E° of the dihydrobenzoquinone / benzoquinone couple is 0.70 V), and 0.1 - 15 mol/L ammonium propionate.

The values are according to the Nernst equation for the hydrogenation of benzoquinone in the positive electrode half-cell and for the dehydrogenation of 2,5-dimethyl-p-dihydrobenzoquinone in the negative electrode half-cell and result in a battery voltage of + 0.4 V. Cooling of the positive electrode half-cell and heating of the negative electrode half-cell switches pH values in each half-cell and drives the dehydrogenation of dihydrobenzoquinone and hydrogenation of 2,5-dimethyl-p-benzoquinone. The reactions and electrons running in the opposite direction result in a battery voltage of 0.2 V.

The altered pH value in one half-cell compared to the other one changes the redox potential between the two different quinone-dihydroquinone couples, which are present in the two half-cells.

Embodiment 8:

The device is the same as described in Embodiment 5, except that a non-volatile thermolabile compound, i.e. liquid polyethylene imine which is doped with a weak or strong acid for pH adjustment to about 7-8 at ambient temperature, such as acetic acid or phosphoric acid, has been used.

The negative electrode electrolyte in the negative electrode half-cell comprises 1 - 55 mol/L water, 0.5 - 10 mol/L n-butanol, 0.5 - 12 mol/L dihydrobenzoquinone, and 0.1 - 15 mol/L polyethylene imine acetate.

The positive electrode electrolyte in the positive electrode half-cell comprises 1 - 55 mol/L water, 0.5 - 10 mol/L

n-butanol, 0.5 - 12 mol/L benzoquinone, and 0.1 - 15 mol/L polyethylene imine acetate.

Otherwise, the device operates in the same manner as described in Embodiment 5.

Embodiment 9:

The device is the same as described in Embodiment 8, except that doped polyaniline as thermolabile compound has been used instead of polyethylene imine acetate. Further advantages of polyaniline are its electrical conductivity and, if desired, its immobilization on the electrodes and/or on wall surfaces of the half-cells which can serve as the carriers of the polymer.

Apart from that, the device operates in the same manner as described in Embodiment 8.

Embodiment 10:

The device is the same as described in Embodiment 8, except that a solid electrolyte is used. In that case, the separator is not mandatory, but a thin layer of POM has been used as precaution. The solid electrolytes have the following compositions:

The negative electrode electrolyte in the negative electrode half-cell comprises dihydroquinone, doped or undoped polyaniline, pulverized graphite and pulverized POM.

The positive electrode electrolyte in the positive electrode half-cell comprises quinone, doped or undoped polyaniline, pulverized graphite and pulverized POM.

Although detailed embodiments and examples have been described, these only serve to provide a better understanding of the invention defined by the independent claims and are not to be seen as limiting.

## Claims

**1.** A device for converting thermal energy of an external heat source into electrical energy, comprising:

- a positive electrode half-cell comprising a positive electrode and a positive electrode electrolyte comprising a quinone derivative or a quinone-dihydroquinone derivative mixture,
- a negative electrode half-cell comprising a negative electrode and a negative electrode electrolyte comprising a dihydroquinone derivative or a dihydroquinone-quinone derivative mixture,
- a conductive connection between the positive electrode and the negative electrode,
- means for heating and optionally means for cooling the positive electrode electrolyte and/or negative electrode electrolyte
- a thermolabile compound, which is present in the positive and in the negative electrode electrolyte,

wherein the positive electrode half-cell and the negative electrode half-cell are linked to each other, such that protons can migrate between the half-cells but not the other molecules and ions of the electrolytes.

**2.** The device according to claim 1, wherein the thermolabile compound is selected from the group of ammonium salts.

**3.** The device according to any one of claims 1 to 2, wherein a sum of the concentrations of the quinone derivative and the dihydroquinone derivative is in a range of 0.1 mol/L to 12 mol/L, preferably of 0.5 mol/L to 10 mol/L with respect to the volume of the electrode electrolytes, and
wherein the thermolabile compound is present in a concentration in a range of 0.01 mol/L to 10 mol/L, preferably 0.01 mol/L to 5 mol/L with respect to the volume of the electrode electrolytes.

**4.** The device according to any one of claims 1 to 3, wherein the positive electrode electrolyte and the negative electrode electrolyte are liquid electrolytes comprising a solvent for dissolving molecules and ions which are present in the electrolytes. Preferably, the solvent comprises water or an aqueous solvent.

**5.** The device according to any one of claims 1 to 4, wherein the positive electrode electrolytes and the negative electrode electrolytes contain inert and thermally stable spectator ions to increase the conductivity within the electrolytes.

**6.** The device according to any one of claims 1 to 5, wherein the electrolytes contain no ions besides ions originating from the quinone derivative, the dihydroquinone derivative, the thermolabile compound and from the decomposition

species of these components.

**7.** The device according to any one of claims 1 to 6, wherein the positive electrode electrolyte and the negative electrode electrolyte are aqueous low melting solid solvents or aqueous low melting eutectic compounds.

**8.** The device according to any one of claims 1 to 7, wherein the positive electrode electrolyte and the negative electrode electrolyte are solid electrolytes comprising proton conducting materials and optionally a separator.

**9.** The device according to any one of claims 1 to 8,

wherein the device further comprises a separator interposed between the positive electrode half-cell and the negative electrode half-cell to separate the positive electrode electrolyte and the negative electrode electrolyte from each other and
wherein the separator is permeable with respect to protons but is impermeable to the quinone derivative, the dihydroquinone derivative, the thermolabile compound, dissociation products of the thermolabile compound and decomposition species of the thermolabile compound other than protons.

**10.** A method of converting thermal energy into electrical energy by using the device as defined in any one of claims 1 to 9 comprising the following steps:

- establishing a conductive connection between the positive electrode half-cell and the negative electrode half-cell so that electrons can migrate between the half-cells;
- heating of the positive electrode electrolyte via an external heat source to a temperature of 40 °C up to 220 °C, and optionally active or passive cooling or heating of the negative electrode electrolyte thereby driving a proton release reaction by an at least partial thermal decomposition of the thermolabile compound in the positive electrode electrolyte, and thereby generating a current flow from the positive to the negative electrode;
- active or passive cooling of the previously heated positive electrode electrolyte and heating of the negative electrode electrolyte to a temperature at which the back reactions take place and thereby generating a current flow in the opposite direction to the current flow generated in the before mentioned step.

**11.** A module comprising two or more devices as defined in any one of claims 1 to 9, wherein the two or more devices are electrically connected in series or in parallel.

**12.** An energy saving system, comprising:

- the device according to any one of claims 1 to 9 for converting thermal energy from the external heat source into electrical energy; and
- a capacitor or a superconducting magnetic energy storage system or an accumulator coupled to the device for storing the electrical energy generated by said device.

**13.** A battery, comprising:

- a positive electrode half-cell comprising a positive electrode and a positive electrode electrolyte comprising a quinone derivative or a mixture of a quinone-dihydroquinone derivative,
- a negative electrode half-cell comprising a negative electrode and a negative electrode electrolyte comprising a dihydroquinone derivative or a mixture of a quinone-dihydroquinone derivative,
- a conductive connection between the positive electrode half-cell and the negative electrode half-cell and
- a thermolabile compound,
- wherein in a discharged state of the battery, the positive and the negative electrode electrolyte comprise the thermolabile compound in an undecomposed state,
- wherein in a charged state of the battery, the positive electrode electrolyte comprises protons and other decomposition products of the at least partly decomposed thermolabile compound, which come into existence by heating the positive electrode electrolyte, and the negative electrode electrolyte comprises the thermolabile compound in the undecomposed state, and
- wherein the positive electrode half-cell and the negative electrode half-cell are linked to each other, such that protons can migrate between the half-cells but not the quinone derivative, the dihydroquinone derivative, the thermolabile compound and its decomposition species other than protons.

**14.** A method of charging the battery as defined in claim 13 by converting thermal energy of an external heat source into chemical energy, comprising the steps:

- interrupting a conductive connection between the positive electrode half-cell and the negative electrode half-cell so that electrons cannot migrate between the half-cells;
- heating of the positive electrode electrolyte via a heat source to a temperature of 40 °C to 220 °C for a time period of 1 minute to 5 hours, thereby driving a proton release reaction by decomposing the thermolabile compound in a proton, ammonia or an amine species and an anion.

**15.** The method according to claim 10 or claim 14,

wherein the external heat source is heat waste, solarthermy, geothermy, nuclear fission at a nuclear power plant or in spacecrafts, or nuclear fusion, and
wherein the cooling is effected by the use of ambient or cooled air or other gaseous or liquid medium suitable for cooling, heat radiation to surrounding environment, a molten salt or evaporation of a fluid, such as water.

Europäisches Patentamt
European Patent Office
Office européen des brevets

# EUROPEAN SEARCH REPORT

Application Number
EP 22 15 5911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2017/179558 A1 (MCKONE JAMES R [US] ET AL) 22 June 2017 (2017-06-22)<br>* page 2, paragraph 0017 - page 11, paragraph 0080; claims 1-40; figures 1-9 *<br>----- | 1-15<br>3,7,8, 11,12,15 | INV.<br>F25B9/14<br>F25B23/00<br>H01M8/04014<br>H01M8/04029<br>H01M8/04007<br>H01M8/18<br>H01M8/22<br>H01M14/00<br>C25B9/15<br>C25B15/021 |
| X<br>Y | EP 3 584 866 A1 (UNIV KYUSHU NAT UNIV CORP [JP]) 25 December 2019 (2019-12-25)<br>* formulae Chem. 2, 3 and 6-8; page 1, paragraph 0009 - page 16, paragraph 0115; claims 1-22; figures 1-7; examples 1-3; tables 1-5 *<br>----- | 1,2, 4-10,13, 14<br>3,7,8, 11,12,15 | |
| Y | WO 2011/131959 A1 (UNIV BELFAST [GB]; DOHERTY ANDREW P [GB])<br>27 October 2011 (2011-10-27)<br>* abstract *<br>* page 4, line 7 - page 41, line 13; figures 1, 31 *<br>----- | 7 | |
| Y | US 2010/260309 A1 (HYDE RODERICK A [US] ET AL) 14 October 2010 (2010-10-14)<br>* abstract *<br>* paragraph [0010] *<br>* paragraph [0031] *<br>----- | 15 | TECHNICAL FIELDS SEARCHED (IPC)<br>H01M<br>F25B<br>C25B |

The present search report has been drawn up for all claims

1

| Place of search | Date of completion of the search | Examiner |
|---|---|---|
| Munich | 28 July 2022 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 15 5911

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2022

| Patent document cited in search report | Publication date | Patent family member(s) | Publication date |
|---|---|---|---|
| US 2017179558 A1 | 22-06-2017 | US 2017179558 A1 | 22-06-2017 |
| | | WO 2015148358 A1 | 01-10-2015 |
| EP 3584866 A1 | 25-12-2019 | EP 3584866 A1 | 25-12-2019 |
| | | US 2019372145 A1 | 05-12-2019 |
| | | WO 2018151098 A1 | 23-08-2018 |
| WO 2011131959 A1 | 27-10-2011 | NONE | |
| US 2010260309 A1 | 14-10-2010 | CN 102460597 A | 16-05-2012 |
| | | CN 102460598 A | 16-05-2012 |
| | | CN 102460755 A | 16-05-2012 |
| | | US 2010260309 A1 | 14-10-2010 |
| | | WO 2010129007 A1 | 11-11-2010 |
| | | WO 2010138146 A2 | 02-12-2010 |
| | | WO 2010147616 A1 | 23-12-2010 |
| | | WO 2011014219 A1 | 03-02-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20180233763 A1
- WO 2019066651 A1


### Non-patent literature cited in the description


- **M. SKYLLAS-KAZACOS et al.** *Journal of The Electrochemical Society,* 2011, vol. 158 (8), 55-79
- **J.S. WAINRIGHT et al.** Investigation a bromide supported electrolyte for an all-copper flow battery. *Journal of the Electrochemical Society,* 2018, vol. 165 (9), A1797-A1804
- **L. HORNER ; E. GEYER.** Zur Kenntnis der o-Chinone, XXVII. *Redoxpotentiale von Brenzcatechin-Derivaten, Chemische Berichte,* 1965, vol. 98, 2016-2045
- **PARTHA SARATHI GUIN ; SAURABH DAS ; P.C. MANDAL.** Electrochemical Reduction of Quinones in Different Media: A Review. *International Journal of Electrochemistry,* 2011, 1-22
- **A.P. DOHERTY et al.** Quinone Redox-active Ionic Liquids. *J. Mex. Chem. Soc.,* 2015, vol. 59 (4), 263-268
- **P. BERTON et al.** Elucidating the triethylammonium acetate system: Is it molecular or is it ionic?. *Journal of Molecular Liquids,* 2018, vol. 269, 126-131
- **E. BIILMANN ; I. KRARUP.** The Temperature Coefficient of the Quinhydrone Electrode. *Jour. Chem. Soc.,* 1924, vol. 125, 1954-1956
- **A. FATTAHI et al.** The Enthalpies of Formation of o-, m-, and p-Benzoquinone: Gas-Phase Ion Energetics, Combustion Calorimetry, and Quantum Chemical Computations Combined. *J. Am. Chem. Soc.,* 2005, vol. 127 (16), 6116-6122